# EUROPEAN PATENT APPLICATION

(11) **EP 4 823 208 A1**
(43) Date of publication of application: **14.10.2026**
(21) Application number: 24899505.2
(22) Date of filing: 24.10.2024
(51) Int. Cl.: H04W 72/1263

(54) **COMMUNICATION METHOD, APPARATUS AND SYSTEM**

(30) Priority: 05.12.2023 CN 202311669585
(71) Applicant: Huawei Technologies Co., Ltd., Shenzhen, Guangdong 518129 (CN)
(72) Inventor: GE, Cuili, Shenzhen, Guangdong 518129 (CN); LI, Yan, Shenzhen, Guangdong 518129 (CN)
(74) Representative: Huawei European IPR
(86) International application number: PCT/CN2024/127147
(87) International publication number: WO 2025/118862

(57) **Abstract**

This application relates to a communication method, apparatus, and system. A first core network element obtains first BDP requirement information, where the first BDP requirement information indicates a requirement for a product of a bandwidth and a transmission delay that correspond to a first service. The first core network element sends first BDP information to an access network device, where the first BDP information is determined based on the first BDP requirement information, and the first BDP information is used by the access network device to schedule a resource for a terminal device based on the first BDP information. In embodiments of this application, parameters such as a bandwidth and a delay may be considered in combination, to comprehensively ensure network performance.

## Description

### CROSS-REFERENCE TO RELATED APPLICATIONS

This application claims priority to Chinese Patent Application No. 202311669585.1, filed with the China National Intellectual Property Administration on December 5, 2023 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

A current 3rd generation partnership project (3rd generation partnership project, 3GPP) provides a guarantee mechanism of quality of service (quality of service, QoS) of a service for a 5th generation (the 5th generation, 5G) system. Specifically, an application function (application function, AP) provides a service feature for a core network. For example, an AF provides a service feature parameter for a PCF by interacting with a policy and charging control function (policy and charging control function, PCF). The PCF generates a policy charging control (policy charging control, PCC) rule (rule) based on the service feature parameter, and provides the PCC rule to a session control function (session management function, SMF), where the PCC rule may include a QoS parameter of the service. The SMF may obtain the QoS parameter in a protocol data unit (protocol data unit, PDU) session (session) establishment or update procedure, or obtain the QoS parameter in the PCC rule from the PCF. The SMF generates a QoS rule based on the QoS parameter and sends the QoS rule to user equipment (user equipment, UE), generates a QoS profile (profile) and sends the QoS profile to a radio access network (radio access network, RAN), and generates an N4 rule and sends the N4 rule to a user plane function (user plane function, UPF). In this way, the QoS of the service can be guaranteed.

The QoS parameter of the service includes a bandwidth-related parameter, a delay-related parameter, and the like. A bandwidth, a delay, and the like can be guaranteed separately when the QoS is guaranteed. This QoS guarantee mechanism still causes service transmission jitter. For example, service data packets and data packets in a network may increase sharply in a period of time, and then decrease sharply in next period of time. As a result, user service experience deteriorates, and a network transmission capability cannot be maximized.

### SUMMARY

Embodiments of this application provide a communication method, apparatus, and system, to ensure network transmission efficiency and performance.

According to a first aspect, a first communication method is provided. The method may be performed by a core network element, or may be performed by another device having a function of the core network element, or may be performed by a chip system (or a chip) or another functional module, where the chip system or the functional module can implement the function of the core network element, and the chip system or the functional module is, for example, disposed in the core network element. The core network element is, for example, a first core network element. An example in which the method is performed by the first core network element is used in the following descriptions. Optionally, the first core network element is, for example, an SMF, or is another core network element that can implement similar functions. The method includes: obtaining first bandwidth-delay product (bandwidth-delay product, BDP) requirement information, where the first BDP requirement information indicates a requirement for a product of a bandwidth and a transmission delay that correspond to a first service; and sending first BDP information to an access network device, where the first BDP information is determined based on the first BDP requirement information, and the first BDP information is used by the access network device to schedule a resource for a terminal device based on the first BDP information.

In this embodiment of this application, that the access network device may schedule the resource for the terminal device based on the first BDP information may be understood as that the access network device may provide guarantee for QoS of the service based on the first BDP information. A BDP represents a bandwidth-delay product. Efficiency and performance of network transmission may be evaluated based on the BDP. In addition, if the BDP is guaranteed, efficiency and quality of network transmission can be optimized. For example, data packet transmission of the service can be balanced, and service transmission jitter can be reduced. In other words, in embodiments of this application, parameters such as a bandwidth and a delay may be considered in combination, to comprehensively ensure network performance.

With reference to the first aspect, in an optional implementation, sending the first BDP information to the access network device includes: sending, to the access network device, a QoS profile of a QoS flow corresponding to the first service, where the QoS profile includes the first BDP information, and a type of the QoS flow is a GBR type or a non-GBR type. The QoS flow corresponds to the QoS profile. In this embodiment of this application, the first BDP information may be sent to the access network device through the QoS profile, so that the first BDP information does not need to be sent through other signaling, thereby reducing signaling overheads. In addition, the access network device can obtain a plurality of types of information together through the QoS profile, for example, including the first BDP information, and may further include a QoS parameter. This helps simplify a process in which the access network device obtains information.

With reference to the first aspect, in an optional implementation, sending the first BDP information to the access network device includes: sending, to the access network device, a first alternative QoS profile and a second alternative QoS profile of a QoS flow corresponding to the first service, where the first alternative QoS profile includes a first BDP parameter, the second alternative QoS profile includes a second BDP parameter, the first BDP information includes the first BDP parameter and the second BDP parameter, the first BDP parameter includes a first delay range and a first bandwidth range, the second BDP parameter includes a second delay range and a second bandwidth range, both the first delay range and the second delay range are delay ranges allowed by a value of the first BDP parameter, both the first bandwidth range and the second bandwidth range are bandwidth ranges allowed by the value of the first BDP parameter, and a type of the QoS flow is a GBR type or a non-GBR type. For example, in addition to corresponding to the QoS profile, the QoS flow may correspond to one or more alternative QoS profiles. If the QoS flow further corresponds to an alternative QoS profile, the first BDP information may be included in the alternative QoS profile and sent to the access network device, or the first BDP information may be separately included in the QoS profile and the alternative QoS profile and sent to the access network device. In this way, a manner of carrying the first BDP information is flexible.

According to a second aspect, a second communication method is provided. The method may be performed by a core network element, or may be performed by another device having a function of the core network element, or may be performed by a chip system (or a chip) or another functional module, where the chip system or the functional module can implement the function of the core network element, and the chip system or the functional module is, for example, disposed in the core network element. The core network element is, for example, a first core network element. An example in which the method is performed by the first core network element is used in the following descriptions. Optionally, the first core network element is, for example, an SMF, or is another core network element that can implement similar functions. The method includes: obtaining first BDP requirement information, where the first BDP requirement information indicates a requirement for a product of a bandwidth and a transmission delay that correspond to a first service; and sending first BDP information to a user plane function network element, where the first BDP information is determined based on the first BDP requirement information, and the first BDP information indicates the user plane function network element to send BDP information to an access network device.

In this embodiment of this application, the first core network element may send the first BDP information to the user plane function network element, and then the user plane function network element sends corresponding BDP information to the access network device. It can be learned that the BDP information may be sent by the first core network element to the access network device, or may be sent by the user plane function network element to the access network device. This manner is flexible. That the access network device may schedule a resource for a terminal device based on the first BDP information may be understood as that the access network device may provide guarantee for QoS of the service based on the first BDP information. A BDP represents a bandwidth-delay product. Efficiency and performance of network transmission may be evaluated based on the BDP. In addition, if the BDP is guaranteed, efficiency and quality of network transmission can be optimized. For example, data packet transmission of the service can be balanced, and service transmission jitter can be reduced. In other words, in embodiments of this application, parameters such as a bandwidth and a delay may be considered in combination, to comprehensively ensure network performance.

With reference to the second aspect, in an optional implementation, sending the first BDP information to the user plane function network element includes: sending a user plane data processing rule to the user plane function network element, where the user plane data processing rule includes the first BDP information. The first core network element may send the first BDP information included in the user plane data processing rule to the user plane function network element, and does not need to send the first BDP information through other signaling, so that signaling overheads can be reduced.

With reference to the second aspect, in an optional implementation, the user plane data processing rule includes a forwarding action rule, and the first BDP information is included in the forwarding action rule; or the user plane data processing rule includes a packet detection rule, and the first BDP information is included in the packet detection rule. The first BDP information may be included in an existing information element in the user plane data processing rule, or may be included in a newly-added information element in the user plane data processing rule. This is not limited herein.

With reference to the first aspect or the second aspect, in an optional implementation, obtaining the first BDP requirement information includes one or more of the following: obtaining subscription information of the terminal device from a subscription profile repository function network element, where the subscription information indicates the first BDP requirement information; or obtaining a policy rule from a policy control function network element, where the policy rule indicates the first BDP requirement information; or obtaining the first BDP requirement information from local policy information. The first core network element may obtain corresponding BDP requirement information in different ways, to determine the first BDP requirement information. A manner in which the first core network element obtains the first BDP requirement information is not limited in embodiments of this application.

With reference to the first aspect or the second aspect, in an optional implementation, obtaining the first BDP requirement information includes: obtaining 5QI information corresponding to the first service, where the 5QI information indicates the first BDP requirement information. The first BDP requirement information may correspond to a 5QI of the QoS flow of the first service, so that the first BDP requirement information can be determined based on the 5QI, and an indication for the first BDP requirement information is simpler.

With reference to the first aspect or the second aspect, in an optional implementation, the first BDP requirement information includes second BDP requirement information and third BDP requirement information. For example, one 5QI may correspond to one piece of BDP requirement information, or may correspond to a plurality of pieces of BDP requirement information, so that BDP guarantee for the QoS flow is more reliable.

With reference to the first aspect or the second aspect, in an optional implementation, the first BDP requirement information further indicates a priority of the second BDP requirement information and a priority of the third BDP requirement information. For example, one 5QI corresponds to a plurality of pieces of BDP requirement information, and one of the plurality of pieces of BDP requirement information may be used during use. In this case, selection may be performed based on a priority of each piece of BDP requirement information. For example, BDP requirement information with a higher priority is selected, so that a network is more targeted for BDP guarantee.

With reference to the first aspect or the second aspect, in an optional implementation, the first BDP requirement information includes a BDP parameter, or includes an index corresponding to the BDP parameter. The first BDP requirement information may include the BDP parameter, so that the first core network element may directly obtain the BDP parameter. Alternatively, the first BDP requirement information may include the index, and the first core network element can determine the BDP parameter based on the index. In addition, if the first core network element obtains the index by receiving information, signaling overheads can also be reduced.

With reference to the first aspect or the second aspect, in an optional implementation, the first BDP information includes a BDP parameter, or includes an index corresponding to the BDP parameter. The first BDP information may include the BDP parameter, so that the access network device or the user plane function network element can directly obtain the BDP parameter. Alternatively, the first BDP information may include the index, and the access network device or the user plane function network element can determine the BDP parameter based on the index, so that signaling overheads can be reduced.

With reference to the first aspect or the second aspect, in an optional implementation, the BDP parameter includes one or more of the following: a range of a BDP, a delay range of the BDP, or a bandwidth range of the BDP, the delay range is a delay range allowed by the range of the BDP, and the bandwidth range is a bandwidth range allowed by the range of the BDP. The BDP parameter may further include another parameter. This is not limited.

For technical effects brought by the second aspect or the corresponding implementations, refer to the descriptions of the technical effects of the first aspect or the corresponding implementations.

According to a third aspect, a third communication method is provided. The method may be performed by a core network element, or may be performed by another device having a function of the core network element, or may be performed by a chip system (or a chip) or another functional module, where the chip system or the functional module can implement the function of the core network element, and the chip system or the functional module is, for example, disposed in the core network element. The core network element is, for example, a second core network element. An example in which the method is performed by the second core network element is used in the following descriptions. Optionally, the second core network element is, for example, an PCF, or is another core network element that can implement similar functions. The method includes: obtaining information about a first service; and determining first BDP requirement information based on the information about the first service, where the first BDP requirement information indicates a requirement for a product of a bandwidth and a transmission delay that correspond to the first service.

The second core network element may determine the BDP requirement information based on the information about the first service, so that a network can provide BDP guarantee for the first service based on the BDP requirement information.

With reference to the third aspect, in an optional implementation, the information about the first service includes one or more of the following: an identifier of the first service; type information of the first service; media format information corresponding to the first service; bandwidth requirement information of the first service; delay requirement information of the first service; or delay jitter requirement information of the first service. In addition, the information about the first service may further include other information related to the first service. This is not limited herein.

With reference to the third aspect, in an optional implementation, the first BDP requirement information includes a BDP parameter, or includes an index corresponding to the BDP parameter.

With reference to the third aspect, in an optional implementation, the BDP parameter includes one or more of the following: a range of a BDP, a delay range of the BDP, or a bandwidth range of the BDP, the delay range is a delay range allowed by the range of the BDP, and the bandwidth range is a bandwidth range allowed by the range of the BDP.

With reference to the third aspect, in an optional implementation, the first BDP requirement information is indicated by 5QI information corresponding to the first service. Alternatively, the method further includes: determining a 5QI corresponding to the first BDP requirement information.

With reference to the third aspect, in an optional implementation, the first BDP requirement information includes second BDP requirement information and third BDP requirement information.

With reference to the third aspect, in an optional implementation, the first BDP requirement information further indicates a priority of the second BDP requirement information and a priority of the third BDP requirement information.

With reference to the third aspect, in an optional implementation, the method further includes: sending a BDP identifier to an application function network element, where the BDP identifier corresponds to the first BDP requirement information, and the BDP identifier is used by the application function network element to include the BDP identifier in a data packet of the first service. For example, an optional manner of sending the BDP information to the access network device includes: sending the BDP information to the access network device via the application function network element. For example, the application function network element may send the BDP information to the access network device through the data packet of the first service. The second core network element may send the BDP identifier to the application function network element, and the application function network element may include the BDP identifier in the data packet of the first service and send the data packet of the first service to the access network device. The access network device can determine the BDP information based on the BDP identifier.

With reference to the third aspect, in an optional implementation, the method further includes: sending the first BDP requirement information to a session management network element. The second core network element may send the first BDP requirement information to the session management network element (for example, the first core network element), so that the session management network element may determine corresponding BDP information based on the first BDP requirement information and provide the corresponding BDP information for the access network device.

With reference to the third aspect, in an optional implementation, sending the first BDP requirement information to the session management network element includes: sending, to the session management network element, a policy rule of a QoS flow corresponding to the first service, where the policy rule includes the first BDP requirement information, and a type of the QoS flow is a GBR type or a non-GBR type.

With reference to the third aspect, in an optional implementation, sending the first BDP requirement information to the session management network element includes: sending, to the session management network element, a policy rule of a QoS flow corresponding to the first service, where the policy rule includes a first alternative QoS parameter set and a second alternative QoS parameter set, the first alternative QoS parameter set includes a first BDP parameter, the second alternative QoS parameter set includes a second BDP parameter, the first BDP requirement information includes the first BDP parameter and the second BDP parameter, the first BDP parameter includes a first delay range and a first bandwidth range, the second BDP parameter includes a second delay range and a second bandwidth range, both the first delay range and the second delay range are delay ranges allowed by a value of the first BDP parameter, and both the first bandwidth range and the second bandwidth range are bandwidth ranges allowed by the value of the first BDP parameter.

For technical effects brought by the third aspect or the corresponding implementations, refer to the descriptions of technical effects of any one of the first aspect and/or the second aspect or the corresponding implementations.

According to a fourth aspect, a fourth communication method is provided. The method may be performed by an access network device, or may be performed by another device having a function of the access network device, or may be performed by a chip system (or a chip) or another functional module, where the chip system or the functional module can implement the function of the access network device, and the chip system or the functional module is, for example, disposed in the access network device. The access network device is, for example, a base station, or another access network device that can implement similar functions. An example in which the method is performed by the access network device is used in the following descriptions. The method includes: receiving BDP information corresponding to a first flow; and scheduling, based on the BDP information, a resource for a first service transmitted by a terminal device on the first flow.

For example, the access network device may receive BDP information corresponding to QoS flows corresponding to the first service, and the first flow is, for example, one of the QoS flows corresponding to the first service. For the QoS flow corresponding to the first service, the access network device may schedule, based on the BDP information corresponding to the QoS flow, a resource for the first service transmitted by UE on the QoS flow. It may be understood as that the access network device may provide guarantee for QoS of the first service based on the BDP information. A BDP represents a bandwidth-delay product. Efficiency and performance of network transmission may be evaluated based on the BDP. In addition, if the BDP is guaranteed, efficiency and quality of network transmission can be optimized. For example, data packet transmission of the service can be balanced, and service transmission jitter can be reduced. In other words, in embodiments of this application, parameters such as a bandwidth and a delay may be considered in combination, to comprehensively ensure network performance.

With reference to the fourth aspect, in an optional implementation, the BDP information includes a BDP parameter, or includes an index corresponding to the BDP parameter, or includes a BDP identifier.

With reference to the fourth aspect, in an optional implementation, the BDP parameter includes one or more of the following: a range of a BDP, a delay range of the BDP, or a bandwidth range of the BDP, the delay range is a delay range allowed by the range of the BDP, and the bandwidth range is a bandwidth range allowed by the range of the BDP.

With reference to the fourth aspect, in an optional implementation, receiving the BDP information corresponding to the first flow includes: receiving a QoS profile of a QoS flow corresponding to the first service, where the QoS profile includes the BDP information, and a type of the QoS flow is a GBR type or a non-GBR type.

With reference to the fourth aspect, in an optional implementation, receiving the BDP information corresponding to the first flow includes: receiving a first alternative QoS profile and a second alternative QoS profile of a QoS flow corresponding to the first service, where the first alternative QoS profile includes a first BDP parameter, the second alternative QoS profile includes a second BDP parameter, the BDP information includes the first BDP parameter and the second BDP parameter, the first BDP parameter includes a first delay range and a first bandwidth range, the second BDP parameter includes a second delay range and a second bandwidth range, both the first delay range and the second delay range are delay ranges allowed by a value of the first BDP parameter, both the first bandwidth range and the second bandwidth range are bandwidth ranges allowed by the value of the first BDP parameter, and a type of the QoS flow is a GBR type or a non-GBR type.

With reference to the fourth aspect, in an optional implementation, the BDP information further indicates a priority of the first BDP parameter and a priority of the second BDP parameter, and scheduling, based on the BDP information, the resource for the first service transmitted by the terminal device on the first flow includes: scheduling, based on a BDP parameter with a higher priority in the first BDP parameter and the second BDP parameter, the resource for the first service transmitted by the terminal device on the first flow. If one piece of BDP information corresponds to a plurality of BDP parameters, the BDP information may further indicate priorities of these BDP parameters, so that the access network device may select a corresponding BDP parameter based on the priority, thereby better enabling a network to provide BDP guarantee based on a BDP parameter of higher importance or more effective.

For technical effects brought by the fourth aspect or the corresponding implementations, refer to the descriptions of technical effects of any one of the first aspect to the third aspect or the corresponding implementations.

According to a fifth aspect, a fifth communication method is provided. The method may be performed by a core network element, or may be performed by another device having a function of the core network element, or may be performed by a chip system (or a chip) or another functional module, where the chip system or the functional module can implement the function of the core network element, and the chip system or the functional module is, for example, disposed in the core network element. The core network element is, for example, a third core network element. An example in which the method is performed by the third core network element is used in the following descriptions. Optionally, the third core network element is, for example, a UPF, or is another core network element that can implement similar functions. The method includes: receiving first BDP information, where the first BDP information indicates a user plane function network element to send BDP information to an access network device; and sending second BDP information to the access network device, where the second BDP information is determined based on the first BDP information.

With reference to the fifth aspect, in an optional implementation, sending the second BDP information to the access network device includes: sending a data packet of a first service to the access network device, where a header of the data packet includes the second BDP information.

With reference to the fifth aspect, in an optional implementation, the first BDP information includes a BDP parameter, or includes an index corresponding to the BDP parameter.

With reference to the fifth aspect, in an optional implementation, the BDP parameter includes one or more of the following: a range of a BDP, a delay range of the BDP, or a bandwidth range of the BDP, the delay range is a delay range allowed by the range of the BDP, and the bandwidth range is a bandwidth range allowed by the range of the BDP.

With reference to the fifth aspect, in an optional implementation, receiving the first BDP information includes: receiving a user plane data processing rule from a session management network element, where the user plane data processing rule includes the first BDP information; or receiving a BDP identifier from an application server, where the BDP identifier indicates the first BDP information.

With reference to the fifth aspect, in an optional implementation, the user plane data processing rule includes a forwarding action rule, and the first BDP information is included in the forwarding action rule; or the user plane data processing rule includes a packet detection rule, and the first BDP information is included in the packet detection rule.

For technical effects brought by the fifth aspect or the corresponding implementations, refer to the descriptions of technical effects of any one of the first aspect to the fourth aspect or the corresponding implementations.

According to a sixth aspect, a sixth communication method is provided. The method may be performed by a core network element, or may be performed by another device having a function of the core network element, or may be performed by a chip system (or a chip) or another functional module, where the chip system or the functional module can implement the function of the core network element, and the chip system or the functional module is, for example, disposed in the core network element. The core network element is, for example, a fourth core network element. An example in which the method is performed by the fourth core network element is used in the following descriptions. Optionally, the fourth core network element is, for example, an AF, or is another core network element that can implement similar functions. The method includes: sending information about a first service to a capability exposure function network element, where the information about the first service is used to determine BDP requirement information; receiving a BDP identifier from the capability exposure function network element, where the BDP identifier corresponds to the BDP requirement information; and sending a data packet corresponding to the first service, where the data packet includes the BDP identifier.

With reference to the sixth aspect, in an optional implementation, sending the information about the first service includes: sending a first request, where the first request is used to request to create a QoS flow corresponding to the first service, and the first request further includes the information about the first service.

With reference to the sixth aspect, in an optional implementation, the information about the first service includes one or more of the following: an identifier of the first service; type information of the first service; media format information corresponding to the first service; bandwidth requirement information of the first service; delay requirement information of the first service; or delay jitter requirement information of the first service.

For technical effects brought by the sixth aspect or the corresponding implementations, refer to the descriptions of technical effects of any one of the first aspect to the fifth aspect or the corresponding implementations.

According to a seventh aspect, a communication apparatus is provided. The communication apparatus may be the first core network element in any one of the first aspect to the sixth aspect. The communication apparatus has a function of the first core network element. The communication apparatus is, for example, the first core network element, or a large device including the first core network element, or a functional module, for example, a baseband apparatus or a chip system, in the first core network element. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the processing unit is configured to obtain first BDP requirement information, where the first BDP requirement information indicates a requirement for a product of a bandwidth and a transmission delay that correspond to a first service; and the transceiver unit (or the sending unit) is configured to send first BDP information to an access network device, where the first BDP information is determined based on the first BDP requirement information, and the first BDP information is used by the access network device to schedule a resource for a terminal device based on the first BDP information.

In an optional implementation, the processing unit is configured to obtain first BDP requirement information, where the first BDP requirement information indicates a requirement for a product of a bandwidth and a transmission delay that correspond to a first service; and the transceiver unit (or the sending unit) is configured to send first BDP information to a user plane function network element, where the first BDP information is determined based on the first BDP requirement information, and the first BDP information indicates the user plane function network element to send BDP information to an access network device.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the function of the first core network element in any one of the first aspect to the sixth aspect.

According to an eighth aspect, a communication apparatus is provided. The communication apparatus may be the second core network element in any one of the first aspect to the sixth aspect. The communication apparatus has a function of the second core network element. The communication apparatus is, for example, the second core network element, a large device including the second core network element, or a functional module, for example, a baseband apparatus or a chip system, in the second core network element. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions of the seventh aspect.

In an optional implementation, the processing unit is configured to obtain information about a first service; and the processing unit is further configured to determine first BDP requirement information based on the information about the first service, where the first BDP requirement information indicates a requirement for a product of a bandwidth and a transmission delay that correspond to the first service.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the function of the second core network element in any one of the first aspect to the sixth aspect.

According to a ninth aspect, a communication apparatus is provided. The communication apparatus may be the access network device in any one of the first aspect to the sixth aspect. The communication apparatus has a function of the access network device. The communication apparatus is, for example, the access network device, or a large device including the access network device, or a functional module, for example, a baseband apparatus or a chip system, in the access network device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions of the seventh aspect.

In an optional implementation, the transceiver unit (or the receiving unit) is configured to receive BDP information corresponding to a first flow; and the processing unit is configured to schedule, based on the BDP information, a resource for a first service transmitted by a terminal device on the first flow.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the function of the access network device in any one of the first aspect to the sixth aspect.

According to a tenth aspect, a communication apparatus is provided. The communication apparatus may be the third core network element in any one of the first aspect to the sixth aspect. The communication apparatus has a function of the third core network element. The communication apparatus is, for example, the third core network element, a large device including the third core network element, or a functional module, for example, a baseband apparatus or a chip system, in the third core network element. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions of the seventh aspect.

In an optional implementation, the transceiver unit (or the receiving unit) is configured to receive first BDP information, where the first BDP information indicates a user plane function network element to send BDP information to an access network device; and the transceiver unit (or the sending unit) is configured to send second BDP information to the access network device, where the second BDP information is determined based on the first BDP information.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the function of the third core network element in any one of the first aspect to the sixth aspect.

According to an eleventh aspect, a communication apparatus is provided. The communication apparatus may be the fourth core network element in any one of the first aspect to the sixth aspect. The communication apparatus has a function of the fourth core network element. The communication apparatus is, for example, the fourth core network element, a large device including the fourth core network element, or a functional module, for example, a baseband apparatus or a chip system, in the fourth core network element. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions of the seventh aspect.

In an optional implementation, the transceiver unit (or the sending unit) is configured to send information about a first service to a capability exposure function network element, where the information about the first service is used to determine BDP requirement information; and the transceiver unit (or the receiving unit) is configured to: receive a BDP identifier from the capability exposure function network element, where the BDP identifier corresponds to the BDP requirement information; and send a data packet corresponding to the first service, where the data packet includes the BDP identifier.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the function of the fourth core network element in any one of the first aspect to the sixth aspect.

According to a twelfth aspect, a communication apparatus is provided. The communication apparatus may be a first core network element, or may be a chip or a chip system used in the first core network element. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first core network element in the foregoing aspects.

According to a thirteenth aspect, a communication apparatus is provided. The communication apparatus may be a second core network element, or may be a chip or a chip system used in the second core network element. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the second core network element in the foregoing aspects.

According to a fourteenth aspect, a communication apparatus is provided. The communication apparatus may be an access network device, or may be a chip or a chip system used in an access network device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the access network device in the foregoing aspects.

According to a fifteenth aspect, a communication apparatus is provided. The communication apparatus may be a third core network element, or may be a chip or a chip system used in the third core network element. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the third core network element in the foregoing aspects.

According to a sixteenth aspect, a communication apparatus is provided. The communication apparatus may be a fourth core network element, or may be a chip or a chip system used in the fourth core network element. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the fourth core network element in the foregoing aspects.

According to a seventeenth aspect, a communication system is provided, including a first core network element and an access network device. The first core network element is configured to perform the method performed by the first core network element in any one of the first aspect to the sixth aspect, and the access network device is configured to perform the method performed by the access network device in any one of the first aspect to the sixth aspect. For example, the first core network element may be implemented by using the communication apparatus in the seventh aspect or the twelfth aspect, and the access network device may be implemented by using the communication apparatus in the ninth aspect or the fourteenth aspect.

Optionally, the communication system may further include a second core network element. The second core network element is configured to perform the method performed by the second core network element in any one of the first aspect to the sixth aspect. For example, the second core network element may be implemented by the communication apparatus in the eighth aspect or the thirteenth aspect.

Optionally, the communication system may further include a third core network element. The third core network element is configured to perform the method performed by the third core network element in any one of the first aspect to the sixth aspect. For example, the third core network element may be implemented by the communication apparatus in the tenth aspect or the fifteenth aspect.

Optionally, the communication system may further include a fourth core network element. The fourth core network element is configured to perform the method performed by the fourth core network element in any one of the first aspect to the sixth aspect. For example, the fourth core network element may be implemented by the communication apparatus in the eleventh aspect or the sixteenth aspect.

According to an eighteenth aspect, another communication system is provided, including a first core network element and a third core network element. The first core network element is configured to perform the method performed by the first core network element in any one of the first aspect to the sixth aspect, and the third core network element is configured to perform the method performed by the third core network element in any one of the first aspect to the sixth aspect. For example, the first core network element may be implemented by the communication apparatus in the seventh aspect or the twelfth aspect, and the third core network element may be implemented by the communication apparatus in the tenth aspect or the fifteenth aspect.

Optionally, the communication system may further include an access network device. The access network device is configured to perform the method performed by the access network device in any one of the first aspect to the sixth aspect. For example, the access network device may be implemented by the communication apparatus in the ninth aspect or the fourteenth aspect.

Optionally, the communication system may further include a second core network element. The second core network element is configured to perform the method performed by the second core network element in any one of the first aspect to the sixth aspect. For example, the second core network element may be implemented by the communication apparatus in the eighth aspect or the thirteenth aspect.

Optionally, the communication system may further include a fourth core network element. The fourth core network element is configured to perform the method performed by the fourth core network element in any one of the first aspect to the sixth aspect. For example, the fourth core network element may be implemented by the communication apparatus in the eleventh aspect or the sixteenth aspect.

According to a nineteenth aspect, a computer-readable storage medium is provided. The computer-readable storage medium is configured to store a computer program or instructions. When the computer program or the instructions are run, the method performed by the first core network element, the second core network element, the third core network element, the access network device, or the fourth core network element in the foregoing aspects is implemented.

According to a twentieth aspect, a computer program product including instructions is provided. When the computer program product runs on a computer, the methods in the foregoing aspects are implemented.

According to a twenty-first aspect, a chip system is provided. The chip system includes a processor and an interface. The processor is configured to: invoke instructions from the interface and run the instructions, to cause the chip system to implement the method according to the foregoing aspects.

### BRIEF DESCRIPTION OF DRAWINGS

FIG. 1A is a diagram of a 5G network based on a service-based architecture;
FIG. 1B is a diagram of a 5G network based on a point-to-point interface;
FIG. 1C is a diagram of a BDP;
FIG. 2, FIG. 4, and FIG. 6 to FIG. 8 are flowcharts of several communication methods according to an embodiment of this application;
FIG. 3A, FIG. 3B, FIG. 3C, and FIG. 5 are several diagrams of a QoS profile including BDP information according to an embodiment of this application;
FIG. 9 is a diagram of an apparatus according to an embodiment of this application; and
FIG. 10 is a diagram of another apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects, and represents that three relationships may exist. For example, A and/or B may represent the following three cases: Only A exists, both A and B exist, and only B exists, where A and B may be singular or plural. The character "/" generally indicates an "or" relationship between the associated objects. For example, A/B indicates A or B. "At least one of the following items (pieces)", "one or more items of", or a similar expression means any combination of these items, including a single item (piece) or any combination of a plurality of items (pieces). For example, at least one of a, b, or c, or one or more of a, b, or c represents a, b, c, a and b, a and c, b and c, or a, b, and c. Each of a, b, or c may be singular or plural.

Ordinal numbers such as "first" and "second" in embodiments of this application are intended to distinguish between a plurality of objects, but are not intended to limit sizes, content, an order, a time sequence, priorities, importance, or the like of the plurality of objects. In addition, step numbers in embodiments described in embodiments of this application are merely intended to distinguish between different steps, but are not intended to limit a sequence of the steps. For example, S202 may be performed before S201, or may be performed after S201, or may be performed simultaneously with S201.

The following describes some terms or concepts in embodiments of this application, to facilitate understanding of a person skilled in the art.
(1) In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, a terminal device in a scenario, including but not limited to the following scenarios: a sensing scenario, cellular communication, device-to-device (device-to-device, D2D) communication, vehicle to everything (vehicle to everything, V2X), machine-to-machine/machine type communication (machine-to-machine/machine-type communication, M2M/MTC), the internet of things (internet of things, IoT), virtual reality (virtual reality, VR), augmented reality (augmented reality, AR), industrial control (industrial control), self driving (self driving), telemedicine (remote medical), smart grid (smart grid), smart furniture, smart office, smart wearable, smart transportation, smart city (smart city), uncrewed aerial vehicle, robot, and indoor commercial scenarios (such as mobile phone projection, file sharing, and video transmission from a mobile phone to VR glasses). The terminal device may also be referred to as a V2X device when used in V2X, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road site unit, RSU). Alternatively, the terminal device may be a device, for example, an electricity meter or a water meter, in the D2D communication.

In addition, in embodiments of this application, the terminal device may alternatively be a terminal device in an IoT system. An IoT is an important part of future development of information technology, and is mainly technically characterized in that things are connected to networks by using communication technologies, to implement intelligent networks of human-machine interconnection and interconnection between things.

If various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board unit, OBU). The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle may use the vehicle-mounted module, the vehicle-mounted assembly, the vehicle-mounted component, the vehicle-mounted chip, or the vehicle-mounted unit that is built in the vehicle, to implement the method in this application.

The terminal device may sometimes be referred to as UE, a terminal, an access station, a UE station, a remote station, a wireless communication device, a user apparatus, or the like.

In embodiments of this application, a communication apparatus configured to implement a function of the terminal device may be a terminal device, or may be an apparatus that can support the terminal device in implementing the function, for example, a chip system. The apparatus may be installed in the terminal device. In the technical solutions provided in embodiments of this application, the technical solutions provided in embodiments of this application are described by using an example in which the apparatus configured to implement the function of the terminal device is the terminal device. In addition, for ease of description, an example in which the terminal device is UE is used for description in embodiments of this application.

(2) A network device in embodiments of this application includes, for example, an access network device and/or a core network device. The access network device is a device having a wireless transceiver function, and is configured to communicate with the terminal device. The access network device includes, but is not limited to, a base station (base transceiver station (base transceiver station, BTS)), NodeB, (eNodeB/eNB, or gNodeB/gNB), a transmission reception point (transmission reception point, TRP), a base station evolved from the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a vehicle-to-everything (vehicle-to-everything, V2X) technology may be a road side unit (road side unit, RSU). The following provides descriptions by using an example in which the access network device is the base station. The base station may communicate with the terminal device, or may communicate with the terminal device via a relay station. The terminal device may communicate with the plurality of base stations in different access technologies. The core network device is configured to implement functions such as mobility management, data processing, session management, and policy and charging. Names and functions of devices that implement core network functions in systems of different access technologies may be different. This is not limited in embodiments of this application. For example, in a 5th generation (5th generation, 5G) mobile communication system, the core network device includes an AMF, a session management function (session management function, SMF), a location management function (location management function, LMF), a unified data management (unified data management, UDM), a policy control function (policy control function, PCF), a short message service function (short message service function, SMSF), a user plane function (user plane function, UPF), or the like.

In a CU-DU architecture, the access network device may include one or more of logical network elements such as a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, but a person skilled in the art may understand their meanings. For example, in an open radio access network (open radio access network, ORAN) system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. For ease of description, in embodiments of this application, the CU, the CU-CP, the CU-UP, the DU, and the RU are used as examples for description. In embodiments of this application, any unit in the CU (or the CU-CP or the CU-UP), the DU, and the RU may be implemented by a software module, a hardware module, or a combination of a software module and a hardware module.

In embodiments of this application, a communication apparatus configured to implement a function of the network device may be a network device, or may be an apparatus that can support the network device in implementing the function, for example, a chip system. The apparatus may be installed in the network device. In the technical solutions provided in embodiments of this application, the technical solutions provided in embodiments of this application are described by using an example in which the apparatus configured to implement the function of the network device is the network device.

The current 3GPP provides a QoS guarantee mechanism for a 5G system. A QoS parameter of a service includes a bandwidth-related parameter, a delay-related parameter, and the like. A bandwidth, a delay, and another parameter can be guaranteed separately when the QoS is guaranteed. However, these parameters cannot completely reflect network transmission efficiency and performance. Even if these parameters are guaranteed, network performance may not be guaranteed.

In view of this, in this embodiment of this application, that the access network device may schedule a resource for UE based on BDP information may be understood as that the access network device may provide guarantee for QoS of the service based on the BDP information. A BDP represents a bandwidth-delay product. Efficiency and performance of network transmission may be evaluated based on the BDP. In addition, if the BDP is guaranteed, efficiency and quality of network transmission can be optimized. In other words, in embodiments of this application, parameters such as a bandwidth and a delay may be considered in combination, to comprehensively ensure network performance.

In addition, in current transport layer congestion control algorithms, some algorithms are designed based on a product of a bandwidth and a delay, for example, a bottleneck bandwidth and round-trip propagation time (bottleneck bandwidth and round-trip propagation time, BBR) algorithm, and a westwood (westwood) algorithm. However, two indicators: the bandwidth and the delay cannot be measured simultaneously at a transport layer. This is because the two indicators have some contradictory extreme values. For example, if a maximum bandwidth is to be measured, an amount of to-be-sent data needs to reach the maximum. However, in this case, round-trip time (round-trip time, RTT) may be very large. If minimum RTT is to be measured, an amount of to-be-sent data needs to be small. In this case, the maximum bandwidth cannot be obtained through measurement. In the BBR algorithm, the two indicators can be alternately sampled and measured, and a maximum bandwidth and a minimum delay in a period of time are used as estimated values. However, this alternate measurement manner affects service experience (because when the minimum RTT is measured, almost no data packet is sent, and service continuity is affected). In addition, the alternate measurement cannot reflect a network transmission status in real time, and there is a specific delay. Therefore, adjusting data packet transmission at an application layer based on a measurement result cannot fully use a real-time network transmission capability. In conclusion, the alternate measurement may affect final service experience of a user.

It can be learned that a current network cannot provide stable BDP guarantee, and therefore continuous detection is required at the transport layer. However, in this embodiment of this application, stable BDP guarantee can be provided. In this way, the bandwidth and the delay do not need to be alternately measured at the transport layer, but a service is transmitted based on corresponding BDP information. This reduces impact of the alternate measurement process on the service, and helps improve user experience. For example, because the alternate measurement does not need to be performed, the RTT does not increase because the maximum bandwidth needs to be measured, so that service transmission is stable and the delay is small; and the transmitted data amount does not decrease because the minimum RTT needs to be measured, so that the network transmission capability can be maximized (or adapted).

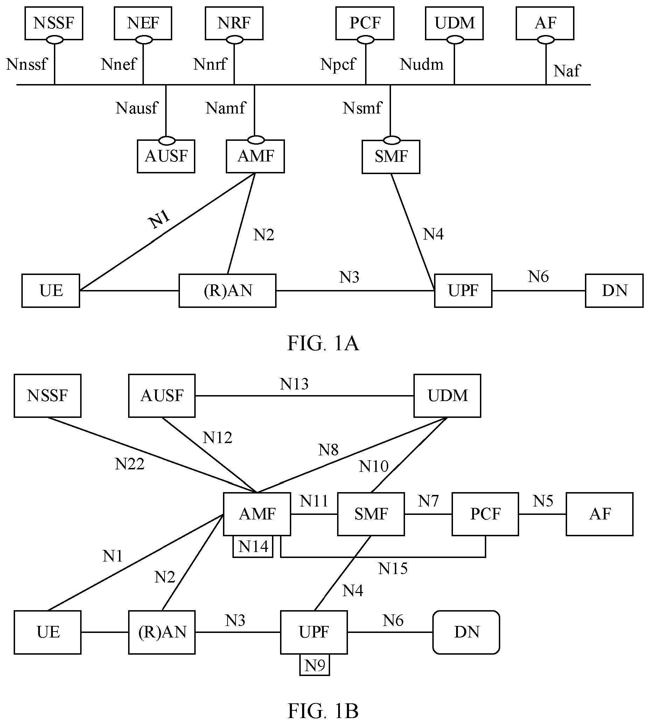

FIG. 1A is a diagram of a 5G network architecture based on a service-based architecture. The network architecture is also a network architecture to which embodiments of this application are applied. The 5G network architecture shown in FIG. 1A may include three parts: a UE part, a data network (data network, DN) part, and an operator network part.

The operator network may include one or more of the following network elements: an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an application function (application function, AF) network element, an access and mobility management function (access and mobility management function, AMF) network element, an SMF network element, a (radio) access network ((radio) access network, (R)AN), a user plane function (user plane function, UPF) network element, or the like.

The operator network includes the radio access network and a core network. The UE accesses the core network through the (R)AN, and the core network includes a user plane network element and a control plane network element. The user plane network element of the core network includes the UPF, and the control plane network element of the core network includes at least one of the AUSF, the AMF, the SMF, an NSSF, the NEF, the NRF, the UDM, the PCF, the AF, or the like.

The user plane network element (for example, the UPF) is mainly responsible for packet data packet forwarding, quality of service (quality of service, QoS) control, charging information statistics collection, and the like. The control plane network element is mainly responsible for service procedure interaction, and delivering a data packet forwarding policy, a QoS control policy, and the like to a user plane. In embodiments of this application, it is considered that a device like a sensor may access the core network through a device like the UE, and the (R)AN, so that a controller connected to a device like the sensor in industrial Ethernet can perform industrial data communication on the user plane through the UPF.

A control plane of the core network may use the service-based architecture, to be specific, a point-to-point communication mode in a conventional architecture is replaced with a service invoking mode for interaction between control plane network elements. In the service-based architecture, a control plane network element exposes a service to another control plane network element for invoking by the another control plane network element. In point-to-point communication, a set of specific messages exist in a communication interface between control plane network elements, and can be used only by control plane network elements at two sides of the interface during communication.

Functions of the network elements in the core network are described as follows:

The UPF supports all or a part of the following functions: interconnection between a protocol data unit (protocol data unit, PDU) session and a data network, packet routing and forwarding (for example, supporting uplink classifier (uplink classifier) on traffic and forwarding the traffic to a data network, and supporting a branching point (branching point) to support a multi-homed (multi-homed) PDU session), or data packet detection.

The AMF performs access management and mobility management on the UE, and is responsible for status maintenance of the UE, reachability management of the UE, forwarding of a non-mobility management (mobility management, MM) non-access-stratum (non-access-stratum, NAS) message, and forwarding of a session management (session management, SM) N2 message.

The SMF performs session management on the UE, and allocates and releases a resource for a session of the UE. The resource includes session quality of service (quality of service, QoS), a session path, a forwarding rule, and the like. The SMF is responsible for selecting or reselecting a UPF, allocating an internet protocol (Internet protocol, IP) address, and further responsible for bearer establishment, modification, release, and the like.

The NEF exposes a network function to a third party through a northbound application programming interface (application programming interface, API).

The NRF stores and selects network functional entity information for another network element.

The PCF performs user policy management, and is configured to generate and manage users, sessions, and QoS flow handling policies.

The UDM is configured to store user data such as subscription information and authentication/authorization information.

The AF performs application management, and provides a specific application layer service for the UE. When providing the service for the UE, the AF has requirements on a QoS (policy (policy)) and a charging (charging) policy and needs to notify the network. In addition, the AF also needs a core network to feed back application-related information.

The DN is a network that provides a data transmission service for a user, for example, an internet protocol multimedia service (internet protocol multimedia service, IMS) or internet (internet). The DN may include a plurality of application servers (application servers, AS).

Related interfaces between the network element functions in embodiments of this application include:
N1: is an interface between the UE and the control plane of the core network.
N2: is a communication interface between the (R)AN and the control plane of the core network.
N3: is a communication interface between the (R)AN and the UPF, and is configured to transmit user plane data.
N4: is a communication interface between the SMF and the UPF, and is used by the SMF to perform policy configuration and the like on the UPF.
N6: is a communication port between the UPF and the DN.

FIG. 1B is a diagram of a 5G network architecture based on a point-to-point interface. The network architecture is another network architecture to which embodiments of this application are applied. For network elements in FIG. 1B, refer to descriptions of related network elements in FIG. 1A. A main difference between FIG. 1B and FIG. 1A lies in that an interface between the network elements in FIG. 1B is a point-to-point interface instead of a service-based interface.

The technical solutions provided in embodiments of this application may be applied to a 4th generation (the 4th generation, 4G) mobile communication technology system, for example, an LTE system, or may be applied to a 5th generation (the 5th generation, 5G) mobile communication technology system, for example, an NR system, or may be applied to a next generation mobile communication system or another similar communication system, for example, a 6th generation (the 6th generation, 6G) mobile communication technology system. This is not specifically limited. In addition, the technical solutions provided in embodiments of this application may be applied to a D2D scenario, for example, an NR-D2D scenario, or may be applied to a V2X scenario, for example, an NR-V2X scenario. For example, embodiments of this application may be used in fields such as factory manufacturing, house-wide intelligence, intelligent driving, assisted driving, intelligent connected vehicles, or indoor commercial scenarios.

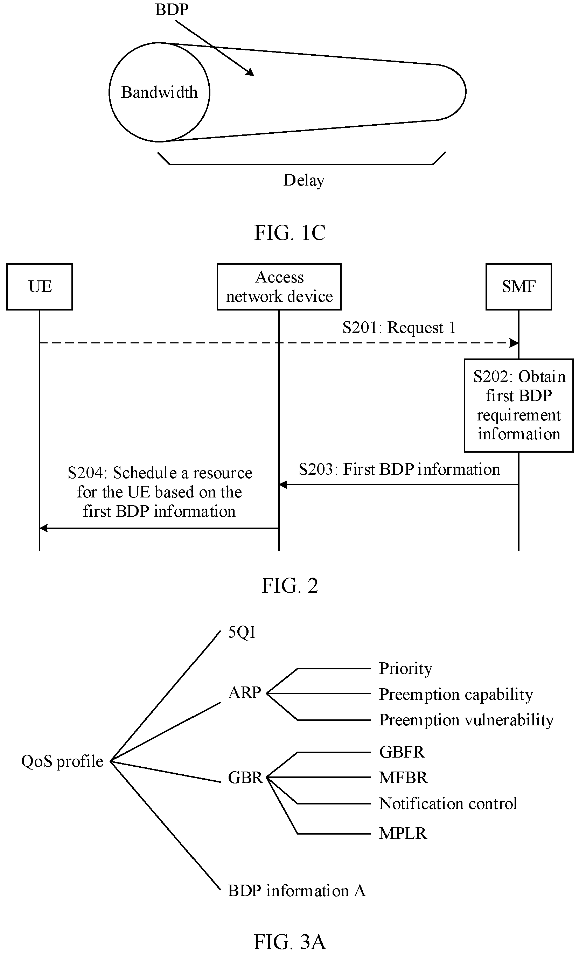

The following describes the method provided in this embodiment of this application with reference to the accompanying drawings. Embodiments of this application relate to a BDP, and are briefly described below. For example, refer to FIG. 1C. In network transmission, a product of a bandwidth and a delay is closely related to a network speed. Generally, the bandwidth refers to a maximum speed of network transmission, and a unit is bit per second (bps). The delay refers to time required for transmitting a data packet from a transmit end to a receive end, and a unit is millisecond (ms). The BDP is equal to an amount of data being transmitted in any given time minus an amount of data that has been sent but not yet acknowledged. A high BDP is an important problem case when TCP tuning such as a transmission control protocol (transmission control protocol, TCP) is designed. This is because the protocol can achieve optimal throughput only when the transmit end sends enough data before being required to stop transmission and waiting for a message that is returned by the receive end and that confirms that the data is successfully received. If an amount of sent data is insufficient compared with an amount of data allowed by the product of the bandwidth and the delay, a link between the transmit end and the receive end does not remain in a busy state. This indicates that the protocol enables the link to run below a transmission peak value, and therefore throughput is insufficient and transmission efficiency is low.

Optionally, a user plane transmission protocol of a network is not limited in this embodiment of this application. For example, a protocol, for example, a general packet radio service (general packet radio service, GPRS) tunneling protocol-user plane (GPRS tunneling protocol-user plane, GTP-U), quick user datagram protocol (user datagram protocol, UDP) connections (quick UDP internet connections, QUIC), or remote direct memory access (Remote direct memory access, RNMA) is used. A transport layer protocol is not limited either. For example, a protocol, for example, QUIC, a transmission control protocol (transmission control protocol, TCP), or RDMA is used.

Embodiments of this specification may be applied to the network architecture shown in FIG. 1A or FIG. 1B. For example, the access network device described in embodiments of this specification may be the (R)AN in FIG. 1A or FIG. 1B. The first core network element described in embodiments of this specification may be the SMF in FIG. 1A and FIG. 1B, or may be another network element in a core network. The SMF is used as an example for description in the following. In other words, the "SMF" in the following may be replaced with the "first core network element". The second core network element described in embodiments of this specification may be the PCF in FIG. 1A or FIG. 1B, or may be another network element in a core network. The PCF is used as an example for description in the following. In other words, the "PCF" in the following may be replaced with the "second core network element". The third core network element described in embodiments of this specification may be the UPF in FIG. 1A or FIG. 1B, or may be another network element in a core network. The UPF is used as an example for description in the following. In other words, the "UPF" in the following may be replaced with the "third core network element". The AF described in embodiments of this specification may be the AF in FIG. 1A or FIG. 1B. The database described in embodiments of this specification may be the UDM in FIG. 1A or FIG. 1B, or may be another network element. The UDM is used as an example for description in the following. In other words, the "UDM" in the following may be replaced with the "database". In the accompanying drawings corresponding to embodiments of this application, all steps represented by dashed lines are optional steps.

An embodiment of this application provides a first communication method. FIG. 2 is a flowchart of the method.

S201: UE sends a request 1. Correspondingly, an SMF receives the request 1. The request 1 may be directly sent by the UE to the SMF without being forwarded by another network element. Alternatively, the UE may send the request 1 to an AMF, and then the AMF sends the request 1 to the SMF.

The request 1 may request to establish a PDU session. For example, the request 1 is a session establishment request (session establishment request) message. Alternatively, the request 1 may request to modify a PDU session. For example, the request 1 is a session modification request (session modification request) message.

Alternatively, this embodiment of this application may occur in a session establishment or modification procedure triggered by a network side, or may not occur in the session establishment procedure or session modification procedure. For example, the SMF may actively perform S202 described below. Therefore, S201 is an optional step.

S202: The SMF obtains first BDP requirement information.

The first BDP requirement information may indicate a requirement for a product of a bandwidth and a transmission delay that correspond to a first service, or the first BDP requirement information may indicate a requirement for a BDP of the first service, or the first BDP requirement information indicates a requirement for an onflight transmitted data amount (onflight data volume) of the first service. The first BDP requirement information corresponds to the first service. Because there may be one or more QoS flows (flows) used to transmit the first service, the first BDP requirement information may include one or more pieces of BDP requirement information. The one or more pieces of BDP requirement information included in the first BDP requirement information may meet one or more of the following: The one or more pieces of BDP requirement information one-to-one correspond to one or more QoS flows used to transmit the first service, that is, one BDP requirement corresponds to one QoS flow; or in the one or more pieces of BDP requirement information, one piece of BDP requirement information may correspond to a plurality of QoS flows; or in the one or more pieces of BDP requirement information, a plurality of pieces of BDP requirement information may correspond to one QoS flow. For example, some services are time-varying, the service requires a high transmission rate in some time periods, and the service requires a low transmission rate in other time periods. In this case, each QoS flow in a part of or all QoS flows used to transmit the service may correspond to a different piece of BDP requirement information in a different period of time, to ensure transmission of the service.

Any piece of BDP requirement information included in the first BDP requirement information may include a BDP parameter, or include an index of the BDP parameter. An index of one BDP parameter uniquely points to (or may be understood as being bound to or associated with) one BDP parameter. If the BDP requirement information includes the index of the BDP parameter, the SMF may determine the BDP parameter based on the index. For example, if the SMF stores information about an association relationship between the BDP parameter and the index, or information about an association relationship between the BDP parameter and the index may be predefined in a protocol, the SMF may determine the BDP parameter based on the information about the association relationship and the index.

Optionally, the BDP parameter may include (or indicate) one or more of the following: a range of a BDP, a delay range of the BDP, or a bandwidth range of the BDP. The range of the BDP may include one specific value of the BDP, or may be one value range of the BDP. The value range includes at least one value of the BDP, and the at least one value of the BDP may be continuous or discrete. A unit of the value of the BDP is, for example, kB or MB. The delay range of the BDP is a delay range allowed by the range of the BDP, and the delay range may include at least one delay. For example, the delay range is represented as [t1, t2], and a unit is, for example, millisecond (ms) or second (s). The bandwidth range of the BDP is a bandwidth range allowed by the range of the BDP, the bandwidth range may include at least one bandwidth, and a unit of the bandwidth is, for example, a quantity of bits transmitted per second (Mbps) or a quantity of megabytes transmitted per second (MBps). Optionally, the range of the BDP and a product of any delay within the delay range and any bandwidth within the bandwidth range may meet a first calculation rule.

For example, if the range of the BDP included in the BDP parameter is one specific value of the BDP, the first calculation rule may include: a difference (or an absolute value of the difference) between the value of the BDP and a product of any delay within the delay range and any bandwidth within the bandwidth range may be less than or equal to a first threshold.

For another example, if the range of the BDP included in the BDP parameter is one value range, the first calculation rule may include: a difference (or an absolute value of the difference) between any value of the BDP in the range of the BDP and a product of any delay within the delay range and any bandwidth within the bandwidth range may be less than or equal to a first threshold.

Optionally, the first threshold may be predefined in the protocol, or may be preconfigured in a corresponding network element (for example, the SMF), or may be set by the SMF or another network element. The first threshold is, for example, 0. For example, a product of any delay within the delay range and any bandwidth within the bandwidth range may be equal to the value of the BDP, or the first threshold may be another value. This is not limited herein.

The range of the BDP may form a constraint on the delay and the bandwidth, to reduce an occurrence probability of an extreme scenario, for example, an excessively large delay and an excessively small bandwidth, or an excessively small delay and an excessively large bandwidth.

Optionally, the first BDP requirement information may be indicated by one or more of the following: indicated by subscription information of the UE, indicated by a policy rule, or indicated by local policy information of the SMF. It may also be understood that the subscription information of the UE includes the first BDP requirement information, and/or the policy rule includes the first BDP requirement information, and/or the local policy information includes the first BDP requirement information. It may be further understood that the first BDP requirement information may include (or indicate) one or more of the following: BDP requirement information that is of the first service and that is indicated by the subscription information of the UE, BDP requirement information that is of the first service and that is indicated by the policy rule of the first service, or BDP requirement information that is of the first service and that is indicated by the local policy information of the SMF. Alternatively, the SMF may determine the first BDP requirement information based on one or more of the following: BDP requirement information that is of the first service and that is indicated by the subscription information of the UE, BDP requirement information that is of the first service and that is indicated by the policy rule, or BDP requirement information that is of the first service and that is indicated by the local policy information. The first service is, for example, a service transmitted by the PDU session that is requested to be established or modified by the request 1. Optionally, the policy rule is, for example, a PCC rule. This is used as an example in the following embodiments.

For example, the SMF may obtain the subscription information of the UE from a UDM. The subscription information may indicate the BDP requirement information of the first service, for example, referred to as BDP requirement information A. The BDP requirement information A corresponds to the first service. Therefore, the BDP requirement information A may include one or more pieces of BDP requirement information. The one or more pieces of BDP requirement information included in the BDP requirement information A may meet one or more of the following: The one or more pieces of BDP requirement information one-to-one correspond to one or more QoS flows used to transmit the first service; or in the one or more pieces of BDP requirement information, one piece of BDP requirement information may correspond to a plurality of QoS flows; or in the one or more pieces of BDP requirement information, a plurality of pieces of BDP requirement information may correspond to one QoS flow. The BDP requirement information A and the first BDP requirement information may be same information. For example, the SMF may use the BDP requirement information A as the first BDP requirement information. Alternatively, the BDP requirement information A may be different from the first BDP requirement information. For example, the SMF may obtain the first BDP requirement information based on the BDP requirement information A, or the SMF may not refer to the BDP requirement information A (for example, refer to BDP requirement information indicated by the PCC rule) when obtaining the first BDP requirement information.

A quantity of pieces of BDP requirement information included in the BDP requirement information A may be the same as or different from a quantity of pieces of BDP requirement information included in the first BDP requirement information; or a QoS flow corresponding to the BDP requirement information A may be completely or partially the same as a QoS flow corresponding to the first BDP requirement information. Any piece of BDP requirement information included in the BDP requirement information A may include (or indicate) one or more of the following: a range of a BDP, indication information A, a delay range of the BDP, or a bandwidth range of the BDP. The indication information A may indicate that the UE has subscribed to BDP guarantee, but the indication information A may not include (or not indicate) a specific BDP parameter. For description of another parameter included in the BDP requirement information, refer to the foregoing description. For example, the subscription information may include the indication information A, and does not include other information. In this case, the SMF may determine that the UE has subscribed to BDP guarantee for a QoS flow corresponding to the BDP requirement information, so that the SMF can guarantee the BDP for transmission of the QoS flow of the UE. In this case, a factor used by the SMF to determine the first BDP requirement information does not include the BDP requirement information A. For example, if the subscription information does not include (or does not indicate) the BDP requirement information, the SMF may obtain the first BDP requirement information according to the policy rule; or if the subscription information does not include (or does not indicate) the BDP requirement information, the SMF may obtain the first BDP requirement information based on preconfigured information or information predefined in the protocol, or the SMF may generate the first BDP requirement information.

For another example, the SMF may obtain a PCC rule from the PCF. The PCC rule may indicate the BDP requirement information of the first service, for example, referred to as BDP requirement information B. The PCC rule corresponds to the PDU session in S201, and the first service may be a service transmitted through the PDU session. For example, the PDU session may transmit one or more services, and the first service may be one of the services. The BDP requirement information B corresponds to the first service. Therefore, the BDP requirement information B may include one or more pieces of BDP requirement information. The one or more pieces of BDP requirement information included in the BDP requirement information B may meet one or more of the following: The one or more pieces of BDP requirement information one-to-one correspond to one or more QoS flows used to transmit the first service; or in the one or more pieces of BDP requirement information, one piece of BDP requirement information may correspond to a plurality of QoS flows; or in the one or more pieces of BDP requirement information, a plurality of pieces of BDP requirement information may correspond to one QoS flow. The BDP requirement information B and the first BDP requirement information may be same information. For example, the SMF may use the BDP requirement information B as the first BDP requirement information. Alternatively, the BDP requirement information B may be different from the first BDP requirement information. For example, the SMF may obtain the first BDP requirement information based on the BDP requirement information B, or the SMF may not refer to the BDP requirement information B (for example, refer to BDP requirement information indicated by the subscription information) when obtaining the first BDP requirement information.

A quantity of pieces of BDP requirement information included in the BDP requirement information B may be the same as or different from a quantity of pieces of BDP requirement information included in the first BDP requirement information; or a QoS flow corresponding to the BDP requirement information B may be completely or partially the same as a QoS flow corresponding to the first BDP requirement information. Any piece of BDP requirement information included in the BDP requirement information B may include (or indicate) one or more of the following: a range of a BDP, a delay range of the BDP, or a bandwidth range of the BDP. For description of a parameter included in the BDP requirement information, refer to the foregoing description. Optionally, the PCC rule includes policy control (policy control) information, and the BDP requirement information B may be included in the policy control information. For example, the policy control information includes a QoS parameter, and the BDP requirement information B may be included in the QoS parameter; or the BDP requirement information B may be included in the policy control information but not included in the QoS parameter, and may be two parallel items (items) with the QoS parameter.

For another example, the SMF may obtain local policy information. The local policy information may indicate the BDP requirement information of the first service, for example, referred to as BDP requirement information C. The BDP requirement information C corresponds to the first service. Therefore, the BDP requirement information C may include one or more pieces of BDP requirement information. The one or more pieces of BDP requirement information included in the BDP requirement information C may meet one or more of the following: The one or more pieces of BDP requirement information one-to-one correspond to one or more QoS flows used to transmit the first service; or in the one or more pieces of BDP requirement information, one piece of BDP requirement information may correspond to a plurality of QoS flows; or in the one or more pieces of BDP requirement information, a plurality of pieces of BDP requirement information may correspond to one QoS flow. The BDP requirement information C and the first BDP requirement information may be same information. For example, the SMF may use the BDP requirement information C as the first BDP requirement information. Alternatively, the BDP requirement information C may be different from the first BDP requirement information. For example, the SMF may obtain the first BDP requirement information based on the BDP requirement information C, or the SMF may not refer to the BDP requirement information C (for example, refer to BDP requirement information indicated by the PCC rule and/or BDP requirement information indicated by the subscription information) when obtaining the first BDP requirement information.

A quantity of pieces of BDP requirement information included in the BDP requirement information C may be the same as or different from a quantity of pieces of BDP requirement information included in the first BDP requirement information; or a QoS flow corresponding to the BDP requirement information C may be completely or partially the same as a QoS flow corresponding to the first BDP requirement information. Any piece of BDP requirement information included in the BDP requirement information C may include (or indicate) one or more of the following: a range of a BDP, indication information B, a delay range of the BDP, or a bandwidth range of the BDP. The indication information B may indicate that the UE corresponds to BDP guarantee, but the indication information B may not include (or not indicate) a specific BDP parameter. For description of another parameter included in the BDP requirement information, refer to the foregoing description. For example, one piece of BDP requirement information included in the BDP requirement information C may include the indication information B, and does not include other information. In this case, the SMF may determine that the UE needs BDP guarantee for a QoS flow corresponding to the BDP requirement information, so that the SMF can guarantee the BDP for transmission of the QoS flow of the UE. In this case, a factor used by the SMF to determine the first BDP requirement information does not include the BDP requirement information C. For example, if the local policy information does not include (or does not indicate) the BDP requirement information, the SMF may obtain the first BDP requirement information according to the policy rule and/or based on the subscription information; or if the local policy information does not include (or does not indicate) the BDP requirement information, the SMF may generate the first BDP requirement information.

Alternatively, the SMF may further obtain BDP requirement information other than the BDP requirement information A, the BDP requirement information B, and the BDP requirement information C. The other BDP requirement information may also be used as a reference factor for the SMF to determine the first BDP requirement information.

For example, the SMF determines the first BDP requirement information based on the BDP requirement information A and/or the BDP requirement information B. For example, if the SMF obtains only the BDP requirement information A, and does not obtain the BDP requirement information B, the SMF may determine the first BDP requirement information based on the BDP requirement information A. For example, the SMF may directly use the BDP requirement information A as the first BDP requirement information. Alternatively, if the SMF obtains only the BDP requirement information B, and does not obtain the BDP requirement information A, the SMF may determine the first BDP requirement information based on the BDP requirement information B. For example, the SMF may directly use the BDP requirement information B as the first BDP requirement information. Alternatively, if the SMF obtains the BDP requirement information A and the BDP requirement information B, because the BDP requirement information A is indicated by the subscription information of the UE and is static information, however the PCC rule comes from the PCF and is information with high time validity, the SMF may determine the first BDP requirement information based on the BDP requirement information B. For example, the SMF may directly use the BDP requirement information B as the first BDP requirement information, and does not consider the BDP requirement information A, so that the first BDP requirement information better meets a current service requirement. Alternatively, if the SMF obtains the BDP requirement information A and the BDP requirement information B, the SMF may determine the first BDP requirement information by combining the BDP requirement information A and the BDP requirement information B.

The SMF determines the first BDP requirement information based on the BDP requirement information A and the BDP requirement information B. Optionally, in a manner, a minimum value or a minimum range of parameters in the BDP requirement information A and the BDP requirement information B is used as a value or a range of the parameter in the first BDP requirement information. For example, both the BDP requirement information A and the BDP requirement information B include the bandwidth range of the BDP, where the bandwidth range included in the BDP requirement information A is [W1, W2], the bandwidth range included in the BDP requirement information B is [W3, W4], and W2-W1 is greater than W4-W3. In this case, the SMF may determine that the bandwidth range of the BDP included in the first BDP requirement information is [W3, W4]. For another example, both the BDP requirement information A and the BDP requirement information B include the range of the BDP, where the range included in the BDP requirement information A is one value, and the value is a, and the range included in the BDP requirement information B is one value range [b, c]. In this case, the SMF may determine that the range of the BDP included in the first BDP requirement information is a. a may be included in [b, c], or may not be included in [b, c], and the SMF does not care about this, but only needs to select a smaller range in the two ranges.

Alternatively, in another determining manner, an intersection set of parameters in the BDP requirement information A and the BDP requirement information B may be used as a value or a range of the parameter in the first BDP requirement information. For example, both the BDP requirement information A and the BDP requirement information B include the range of the BDP, where the range included in the BDP requirement information A is one value range [a, b], the range included in the BDP requirement information B is one value range [c, d], and [c, d] is included in [a, b]. In this case, the SMF may determine that the range of the BDP included in the first BDP requirement information is the value range [c, d]. For another example, both the BDP requirement information A and the BDP requirement information B include the range of the BDP, where the range included in the BDP requirement information A is one value, and the value is a, and the range included in the BDP requirement information B is one value range [b, c], and a is included in [b, c]. In this case, the SMF may determine that the range of the BDP included in the first BDP requirement information is a.

Alternatively, in still another determining manner, all parameters included in the BDP requirement information A and the third BDP information are included in the first BDP requirement information. For example, if the BDP requirement information A includes only the range of the BDP, and does not include another parameter, and the BDP requirement information B includes the range of the BDP, the bandwidth range of the BDP, and the delay range of the BDP, the SMF may determine that the first BDP requirement information includes the range of the BDP, the bandwidth range of the BDP, and the delay range of the BDP. Because both the BDP requirement information A and the BDP requirement information B include the range of the BDP, the SMF may determine, in the manner described above, the range of the BDP included in the first BDP requirement information.

In addition to the foregoing manner, the SMF may determine the first BDP requirement information based on the BDP requirement information A and the BDP requirement information B in another manner. This is not limited in embodiments of this application.

S203: The SMF sends first BDP information. In this embodiment of this application, the SMF may send the first BDP information to an access network device, and the access network device may receive the first BDP information. Optionally, the SMF may send the first BDP information to the AMF, and then the AMF sends the first BDP information to the access network device. Alternatively, the SMF may directly send the first BDP information to the access network device without via the AMF. Optionally, in the session establishment process or the session modification process, the SMF may include the first BDP information in a protocol message (for example, a session management function-RAN message or a session management function-RAN session management message) or an information element (information element, IE) of a reference point between the SMF and a RAN. The information element is, for example, N2 session management information or an N2 session management container.

The first BDP information may be determined based on the first BDP requirement information. For example, the first BDP information is the first BDP requirement information, or the first BDP information may be different from the first BDP requirement information. The first BDP information corresponds to the first service. Therefore, the first BDP information may include one or more pieces of BDP information. The one or more pieces of BDP information included in the first BDP information may meet one or more of the following: The one or more pieces of BDP information one-to-one correspond to one or more QoS flows used to transmit the first service; or in the one or more pieces of BDP information, one piece of BDP information may correspond to a plurality of QoS flows; or in the one or more pieces of BDP information, a plurality of pieces of BDP information may correspond to one QoS flow. A quantity of pieces of BDP information included in the first BDP information may be the same as or different from a quantity of pieces of BDP requirement information included in the first BDP requirement information; or a QoS flow corresponding to the first BDP information may be completely or partially the same as a QoS flow corresponding to the first BDP requirement information. Any piece of BDP information included in the first BDP information may include (or indicate) a BDP parameter, or include (or indicate) a BDP index. The BDP parameter may include one or more of the following: a range of a BDP, a delay range of the BDP, or a bandwidth range of the BDP. For description of the BDP parameter, refer to the foregoing description. If the first BDP information includes an index, the access network device may determine, based on preconfigured information, information predefined in the protocol, information negotiated with the SMF, or the like, the BDP parameter included in the first BDP information. For example, the preconfigured information, the information predefined in the protocol, or the information negotiated with the SMF includes the information about the association relationship between the BDP parameter and the index.

For example, a manner in which the SMF sends the first BDP information is: The SMF includes the first BDP information in a QoS profile of the QoS flow corresponding to the first service, to send the first BDP information by sending the QoS profile. The QoS flow is, for example, a QoS flow of a guaranteed bit rate (guaranteed bit rate, GBR) type or a QoS flow of a non-GBR (non-GBR) type. For example, the SMF may send the QoS profile to the AMF, and then the AMF sends the QoS profile to the access network device. Alternatively, the SMF may send the QoS profile to the access network device without forwarding the QoS profile via another network element. The QoS profile may one-to-one correspond to the QoS flow. Because the first service may correspond to one or more QoS flows, the first service may also correspond to one or more QoS profiles. The SMF may include the first BDP information in the QoS profile corresponding to the first service in a plurality of different manners. The following provides an example for description.

The one or more QoS flows corresponding to the first service may include a QoS flow of a GBR type and/or a QoS flow of a non-GBR type. One QoS flow may be a QoS flow of a GBR type or a QoS flow of a non-GBR type. In an optional manner in which the first BDP information exists in the QoS profile corresponding to the first service, a QoS profile corresponding to each QoS flow in all QoS flows of a GBR type and all QoS flows of a non-GBR type in the one or more QoS flows may include the first BDP information, or a QoS profile corresponding to each QoS flow in the one or more QoS flows may include the first BDP information. In this case, when including the first BDP information in the QoS profile corresponding to the QoS flow, the SMF does not need to determine whether the QoS flow is of a GBR type or a non-GBR type. The first BDP information corresponds to the first service, and the first service may be transmitted through one or more QoS flows. For example, the first BDP information may include BDP information corresponding to each of the one or more QoS flows. In this case, first BDP information included in one QoS profile may be BDP information of a QoS flow that corresponds to the QoS profile and that is in the first BDP information. Optionally, first BDP information included in one QoS profile may be included in a common (common) parameter of the QoS profile. In other words, the first BDP information may not be bound to a specific QoS flow type (type), or may not belong to a child (child) item (item) or a sub-parameter of a QoS flow. Alternatively, first BDP information included in a QoS profile corresponding to one QoS flow of a GBR type may be included in GBR information of the QoS profile, and first BDP information included in a QoS profile corresponding to one QoS flow of a non-GBR type may be included in non-GBR information of the QoS profile.

For example, FIG. 3A is a diagram of a QoS profile corresponding to one QoS flow of a GBR type. The QoS profile may include information such as a 5G QoS identifier (5G QoS identifier, 5QI), an allocation and retention priority (allocation and retention priority, ARP), and GBR information of a corresponding QoS flow, and further include the first BDP information (for example, including BDP information of a QoS flow that corresponds to the QoS profile and that is in the first BDP information, and in FIG. 3A, an example in which the BDP information is BDP information A and the BDP information is included in a common parameter is used). The ARP information may include information such as a priority (priority level), a preemption capability (preemption capability), and a preemption vulnerability (preemption vulnerability). The preemption capability may indicate whether to allow to preempt another QoS flow with a low priority, and the preemption vulnerability may indicate whether to allow to preempt the QoS flow by another QoS flow with a higher priority. The GBR information may include information such as a guaranteed flow bit rate (guaranteed flow bit rate, GFBR), a maximum flow bit rate (maximum flow bit rate, MFBR), notification control (notification control), and a maximum packet loss rate (maximum packet loss rate, MPLR). The notification control may indicate whether the access network device is requested to send a notification indicating that the GFBR cannot be performed when the access network device cannot perform the GFBR. The MPLR may be specific to a voice data packet.

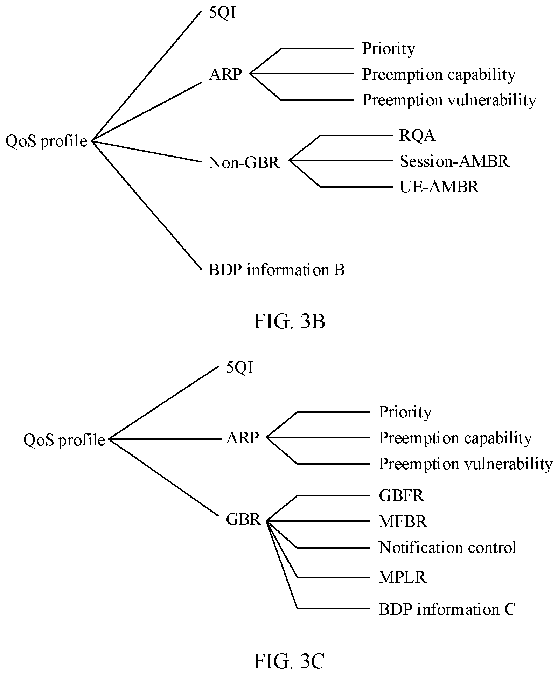

FIG. 3B is a diagram of a QoS profile corresponding to one QoS flow of a non-GBR type. The QoS profile may include information such as a 5QI, an ARP, and non-GBR information of a corresponding QoS flow, and further include the first BDP information (for example, including BDP information of a QoS flow that corresponds to the QoS profile and that is in the first BDP information, and in FIG. 3B, an example in which the BDP information is BDP information B and the BDP information is included in a common parameter is used). Optionally, the non-GBR information may include information such as reflective QoS (reflective QoS, RQA), a session (session)-aggregate maximum bit rate (aggregate maximum bit rate, AMBR), and a UE-AMBR. For content included in the ARP information, refer to the description of FIG. 3A.

In another optional manner in which the first BDP information exists in the QoS profile corresponding to the first service, a QoS profile corresponding to each QoS flow in all QoS flows of a GBR type in the one or more QoS flows may include the first BDP information, and a QoS profile corresponding to each QoS flow in all QoS flows of a non-GBR type in the one or more QoS flows may not include the first BDP information. It may be understood that, for the QoS flow of the GBR type, a BDP of the QoS flow may be guaranteed, and for the QoS flow of the non-GBR type, a BDP does not need to be guaranteed. First BDP information included in one QoS profile may be BDP information of a QoS flow that corresponds to the QoS profile and that is in the first BDP information. Optionally, first BDP information included in a QoS profile corresponding to one QoS flow of a GBR type may be included in GBR information of the QoS profile, or may be included in a common parameter of the QoS profile. If the QoS profile corresponding to the QoS flow of the GBR type may include the first BDP information, but a QoS profile of a non-GBR type does not include the first BDP information, when including the first BDP information, the SMF needs to determine whether the QoS flow corresponding to the first service is of a GBR type or a non-GBR type, to include the first BDP information in the QoS profile of the QoS flow of the GBR type, but not include the first BDP information in the QoS profile of the QoS flow of the non-GBR type.

For example, FIG. 3C is a diagram of one QoS profile. A QoS flow corresponding to the QoS profile is a QoS flow of a GBR type. Therefore, the QoS profile may include the first BDP information (if the QoS flow corresponding to the QoS profile is a QoS flow of a non-GBR type, the QoS profile does not include the first BDP information). The QoS profile may include information such as a 5QI, an ARP, and a GBR of a corresponding QoS flow. For content included in the ARP information and the GBR information, refer to the description of FIG. 3A. In FIG. 3C, the first BDP information may be included in the GBR information. That is, in FIG. 3C, that the first BDP information is included in the GBR information is used as an example. For example, the GBR information includes BDP information of a QoS flow that corresponds to the QoS profile and that is in the first BDP information. In FIG. 3C, that the BDP information is BDP information C is used as an example.

Optionally, if the SMF implements QoS flow binding, the SMF may further consider whether the QoS flow corresponding to the first service matches the first BDP requirement information. If the first BDP requirement information matches the QoS flow corresponding to the first service, S203 and the steps described below may be performed. If the first BDP requirement information does not match the QoS flow corresponding to the first service, S203 and the following steps may not be performed, that is, BDP guarantee may not be provided for the first service.

S204: The access network device schedules a resource for the UE based on the first BDP information.

According to the foregoing steps, the access network device obtains the first BDP information, so that the access network device can provide BDP guarantee for all or a part of QoS flows corresponding to the first service. For example, the access network device may schedule the resource for the UE to perform the first service based on the first BDP information. For example, a bandwidth of a frequency domain resource scheduled by the access network device for the UE to perform the first service may be within a bandwidth range of a BDP indicated by the first BDP information. For another example, the resource scheduled by the access network device for the UE to perform the first service can meet a requirement that a delay of transmitting the first service by the UE by using the resource is within a delay range of the BDP indicated by the first BDP information. For example, the first BDP information includes one or more pieces of BDP information. For example, if one piece of BDP information 1 in the one or more pieces of BDP information corresponds to a QoS flow 1, a bandwidth of a resource that is used to transmit the first service and that is scheduled by the access network device for the QoS flow 1 may be within a bandwidth range of a BDP indicated by the BDP information 1, and a delay of transmitting the first service by the UE by using the resource may be within a delay range of the BDP indicated by the BDP information 1.

In conclusion, in this embodiment of this application, that the access network device may schedule the resource for the UE based on the first BDP information may be understood as that the access network device may provide guarantee for QoS of the service based on the first BDP information. A BDP represents a bandwidth-delay product. Efficiency and performance of network transmission may be evaluated based on the BDP. In addition, if the BDP is guaranteed, efficiency and quality of network transmission can be optimized. In other words, in embodiments of this application, parameters such as a bandwidth and a delay may be considered in combination, to comprehensively ensure network performance. For example, in this embodiment of this application, stable service amount transmission can be provided by guaranteeing the BDP. On one hand, alternate measurement of the delay and the bandwidth does not need to be performed at the transport layer, thereby reducing impact of the alternate measurement on service transmission jitter and user experience deterioration. In addition, network transmission traffic can be balanced by guaranteeing and stabilizing the BDP, and network transmission resource utilization can be further improved.

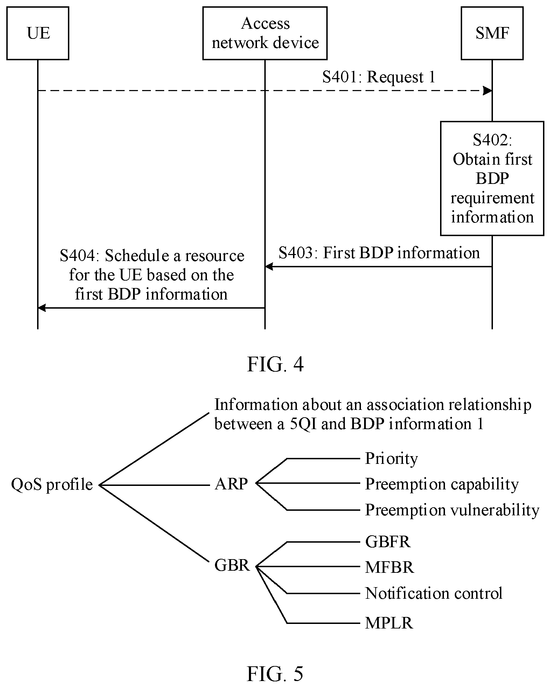

An embodiment of this application provides a second communication method. FIG. 4 is a flowchart of the method.

S401: UE sends a request 1. Correspondingly, an SMF receives the request 1.

For more content of S401, refer to S201 in the embodiment shown in FIG. 2. Similar to the embodiment shown in FIG. 2, S401 is also an optional step.

S402: The SMF obtains first BDP requirement information.

Optionally, that the SMF obtains the first BDP requirement information includes, for example, that the SMF obtains information about an association relationship between the first BDP requirement information and a 5QI corresponding to a first service; or that the SMF obtains the first BDP requirement information includes, for example, that the SMF obtains a 5QI corresponding to a first service, where the 5QI indicates the first BDP requirement information, so that the SMF may determine the first BDP requirement information indicated by the 5QI. This is used as an example in FIG. 4. In other words, there may be a correspondence (or an association relationship) between the BDP requirement information and the 5QI in this embodiment of this application. The 5QI may one-to-one correspond to the QoS flow, or one 5QI may correspond to a plurality of QoS flows. The first BDP requirement information corresponds to the first service, and the first BDP requirement information may include one or more pieces of BDP requirement information. The one or more pieces of BDP requirement information included in the first BDP requirement information may meet one or more of the following: The one or more pieces of BDP requirement information one-to-one correspond to one or more QoS flows used to transmit the first service, and the information about the association relationship may indicate a plurality of groups of association relationships, where one group of association relationships is an association relationship between one 5QI and one piece of BDP requirement information; or in the one or more pieces of BDP requirement information, one piece of BDP requirement information may correspond to a plurality of QoS flows, and the information about the association relationship may indicate a plurality of groups of association relationships, where one group of association relationships is an association relationship between one 5QI and one piece of BDP requirement information, and BDP requirement information in different groups of association relationships may be the same or different, or one group of association relationships is an association relationship between a plurality of 5QIs and one piece of BDP requirement information; or in the one or more pieces of BDP requirement information, a plurality of pieces of BDP requirement information may correspond to one QoS flow, and the information about the association relationship may indicate a plurality of groups of association relationships, where one group of association relationships is an association relationship between one 5QI and one piece of BDP requirement information, and 5QIs in different groups of association relationships may be the same or different, or one group of association relationships is an association relationship between one 5QI and a plurality of pieces of BDP requirement information.

For content of any piece of BDP requirement information included in the first BDP requirement information, refer to the related description of S202 in the embodiment shown in FIG. 2.

For example, refer to Table 1. Table 1 is an example of the information about the association relationship. For example, the information about the association relationship may include one or more items in Table 1, and one row in Table 1 is considered as one item. In Table 1, an example in which the BDP requirement information includes the BDP parameter, and the BDP parameter includes the range of the BDP, the delay range of the BDP, and the bandwidth range of the BDP is used.

**Table 1**

| 5QI | Resource type (resource type) | Default priority (default priority level) | Packet delay budget (packet delay budget, PDB) | Packet error rate (packet error rate, PER) | Default maximum data burst volume (default maximum data burst volume) | Default average window (default averaging window) | BDP parameter |
|---|---|---|---|---|---|---|---|
| 1 | GBR | 20 | 100 ms | 10⁻² | N/A | 2000 ms | BDP requirement information 2 (including X1 (MB), delay range (range) [t1, t2], bandwidth range [BW1 mbps to BW2 mbps]) BDP requirement information 3 (including X2 (MB), delay range [t3, t4], bandwidth range [BW3 mbps to BW4 mbps]) |
| 2 | | 40 | 150 ms | 10⁻³ | N/A | 2000 ms | BDP requirement information 1 (including X3 (MB), delay range [t5, t6], bandwidth range [BW5 mbps to BW6 mbps]) |

In Table 1, N/A indicates "none" or "not involved". In Table 1, 5QI=2 corresponds to one piece of BDP requirement information, for example, the BDP requirement information 1. A range of the BDP included in the BDP requirement information 1 includes one value of the BDP, the value of the BDP is X3, the delay range of the BDP is [t5, t6], and the bandwidth range of the BDP is [BW5 mbps to BW6 mbps]. 5QI=1 corresponds to two pieces of BDP requirement information. A range of the BDP included in one of the two pieces of BDP requirement information (for example, the BDP requirement information 2) includes one value of the BDP, the value of the BDP is X1, the delay range of the BDP is [t1, t2], and the bandwidth range of the BDP is [BW1 mbps to BW2 mbps]; and a range of the BDP included in the other of the two pieces of BDP requirement information (for example, the BDP requirement information 3) includes one value of the BDP, the value of the BDP is X2, the delay range of the BDP is [t3, t4], and the bandwidth range of the BDP is [BW3 mbps to BW4 mbps]. Optionally, if one 5QI corresponds to a plurality of pieces of BDP requirement information, the plurality of pieces of BDP requirement information may respectively correspond to corresponding priorities. For example, in Table 1, the BDP requirement information 2 and the BDP requirement information 3 correspond to 5QI=1, and the two pieces of BDP requirement information may respectively have corresponding priorities. If an access network device obtains the two pieces of BDP requirement information corresponding to 5QI=2, when scheduling a resource for a QoS flow whose 5QI=2 based on the two pieces of BDP requirement information, the access network device may preferentially schedule the resource based on BDP requirement information with a higher priority in the two pieces of BDP requirement information. Optionally, if the BDP requirement information with the higher priority is invalid or unavailable, the access network device may schedule the resource based on BDP requirement information with a lower priority in the two pieces of BDP requirement information.

Optionally, the first BDP requirement information may be indicated by subscription information of the UE, and/or the first BDP requirement information may be indicated by a policy rule. It may also be understood that the first BDP information includes subscription information of the UE, where the subscription information of the UE indicates the first BDP requirement information, and/or the first BDP information includes a policy rule, where the policy rule indicates the first BDP requirement information. It may be further understood that the first BDP requirement information may include (or indicate) BDP requirement information that is of the first service and that is indicated by the subscription information of the UE, and/or include BDP requirement information that is of the first service and that is indicated by a PCC rule. Alternatively, the SMF may determine the first BDP requirement information based on BDP requirement information that is of the first service and that is indicated by the subscription information of the UE and/or based on BDP requirement information that is of the first service and that is indicated by a PCC rule. The first service is, for example, a service transmitted by the PDU session that is requested to be established or modified by the request 1. Alternatively, the SMF may further obtain BDP requirement information other than BDP requirement information A, BDP requirement information B, and BDP requirement information C. The other BDP requirement information may also be used as a reference factor for the SMF to determine the first BDP requirement information. This is not limited herein. For more descriptions of this part of content, refer to S202 in the embodiment shown in FIG. 2. Optionally, different from the embodiment shown in FIG. 2, in this embodiment of this application, the BDP requirement information A indicated by the subscription information may include information about an association relationship between the BDP requirement information A and the 5QI, or the subscription information indicates a 5QI of the first service, and the SMF may determine the BDP requirement information A based on the 5QI, and/or in this embodiment of this application, the BDP requirement information B indicated by the PCC rule may include information about an association relationship between the BDP requirement information B and the 5QI, or the PCC rule indicates a 5QI of the first service, and the SMF may determine the BDP requirement information B based on the 5QI, and/or in this embodiment of this application, the BDP requirement information B indicated by the local policy information may include information about an association relationship between the BDP requirement information C and the 5QI, or the local policy information indicates a 5QI of the first service, and the SMF may determine the BDP requirement information C based on the 5QI.

S403: The SMF sends first BDP information. In this embodiment of this application, the SMF may send the first BDP information to the access network device, and the access network device may receive the first BDP information.

The first BDP information may be determined based on the first BDP requirement information. For example, the first BDP information is the first BDP requirement information, or the first BDP information may be different from the first BDP requirement information. For more descriptions of the first BDP information, refer to the embodiment shown in FIG. 2. Different from the embodiment shown in FIG. 2, in this embodiment of this application, that the SMF sends the first BDP information may be sending the information about the association relationship between the first BDP information and the 5QI, or may be sending only the 5QI corresponding to the first service, and the access network device may determine the first BDP information based on the 5QI.

For example, a manner in which the SMF sends the first BDP information to the access network device is: The SMF includes the first BDP information in a QoS profile of the QoS flow corresponding to the first service, to send the first BDP information by sending the QoS profile. The QoS flow is, for example, a QoS flow of a GBR type or a QoS flow of a non-GBR type. For example, the SMF may send the QoS profile to an AMF, and then the AMF sends the QoS profile to the access network device. Alternatively, the SMF may send the QoS profile to the access network device without forwarding the QoS profile via another network element. The QoS profile may one-to-one correspond to the QoS flow. Because the first service may correspond to one or more QoS flows, the first service may also correspond to one or more QoS profiles. For example, a manner in which the SMF includes the first BDP information in the QoS profile corresponding to the first service is: A QoS profile corresponding to each QoS flow in all or a part of QoS flows corresponding to the first service may include the information about the association relationship between the 5QI and the first BDP information, or include the 5QI. The first BDP information may include one or more pieces of BDP information, and one 5QI may correspond to a part of or all pieces of BDP information. In this case, information about an association relationship between a 5QI included in one QoS profile and the first BDP information may be information about an association relationship between the 5QI and BDP information that corresponds to the 5QI and that is in the first BDP information. For example, the first BDP information includes BDP information 1 (identified by a BDP index #1) and BDP information 2 (identified by a BDP index #2), a 5QI corresponds to the BDP information 1, and the 5QI is included in one QoS profile. In this case, the QoS profile may include information about an association relationship between the 5QI and the BDP information 1 (for example, <5QI, BDP index #1>), and does not include information about an association relationship between the 5QI and the BDP information 2.

The first service may correspond to one or more 5QIs, and each of the one or more 5QIs may have corresponding BDP information, or a part of the 5QIs may have corresponding BDP information and the remaining 5QIs do not have corresponding BDP information. For example, if a 5QI in one QoS profile has an association relationship with the first BDP information, the QoS profile may include information about an association relationship between the 5QI and corresponding BDP information. If a 5QI in one QoS profile has no association relationship with the first BDP information, the QoS profile may include the 5QI, and does not include information about an association relationship between the 5QI and corresponding BDP information. Alternatively, regardless of whether there is an association relationship between the 5QI and the BDP information, the QoS profile may include the 5QI, and does not include the corresponding BDP information. In this case, the access network device may determine the corresponding BDP information based on the association relationship between the 5QI and the BDP information.

For example, FIG. 5 is a diagram of one QoS profile. For example, the QoS profile corresponds to 5QI=2. It can be learned from Table 1 that the 5QI=2 corresponds to the BDP information 1. In this case, the QoS profile may include information about an association relationship between the 5QI=2 and the BDP information 1, or may include the 5QI=2 but not include the BDP information 1. In FIG. 5, an example in which the QoS profile includes the information about the association relationship between the 5QI=2 and the BDP information 1 is used. A QoS flow corresponding to the 5QI corresponding to the first BDP information may include a QoS flow of a GBR type and/or a QoS flow of a non-GBR type. In FIG. 5, an example in which the QoS profile is a QoS profile of a GBR type is used. For more parameters included in the QoS profile, refer to the description of FIG. 3A or FIG. 3C in the embodiment shown in FIG. 2.

S404: The access network device schedules a resource for the UE based on the first BDP information.

For more content of S404, refer to S204 in the embodiment shown in FIG. 2.

In conclusion, in this embodiment of this application, that the access network device may schedule the resource for the UE based on the first BDP information may be understood as that the access network device may provide guarantee for QoS of the service based on the first BDP information. A BDP represents a bandwidth-delay product. Efficiency and performance of network transmission may be evaluated based on the BDP. In addition, if the BDP is guaranteed, efficiency and quality of network transmission can be optimized. In other words, in embodiments of this application, parameters such as a bandwidth and a delay may be considered in combination, to comprehensively ensure network performance. In addition, in this embodiment of this application, an association is established between the 5QI and the BDP information, so that the access network device can determine the corresponding BDP information based on the 5QI, and a manner in which the access network device obtains the BDP information is more direct.

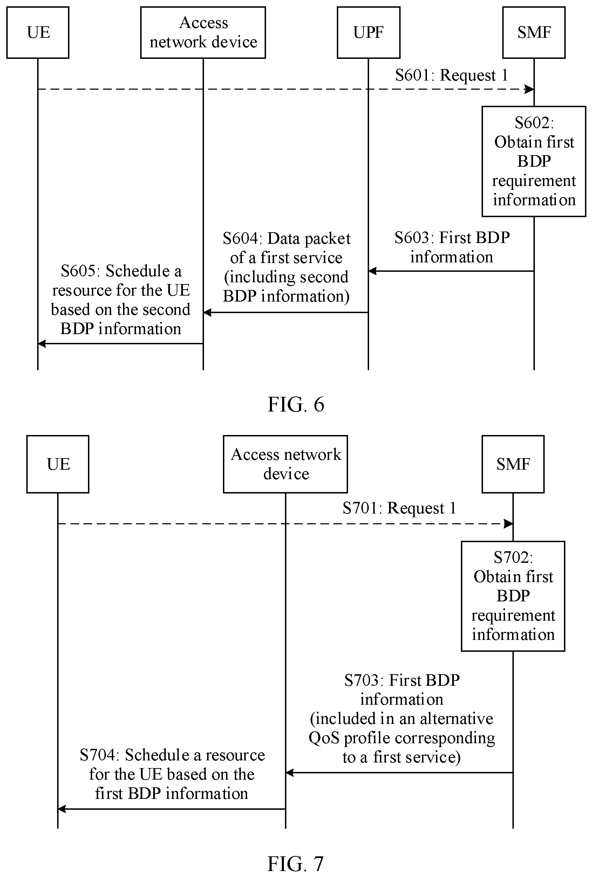

An embodiment of this application provides a third communication method. FIG. 6 is a flowchart of the method.

S601: UE sends a request 1. Correspondingly, an SMF receives the request 1.

For more content of S601, refer to S201 in the embodiment shown in FIG. 2. Similar to the embodiment shown in FIG. 2, S601 is also an optional step.

S602: The SMF obtains first BDP requirement information.

For more content of S602, refer to S201 in the embodiment shown in FIG. 2, or refer to S401 in the embodiment shown in FIG. 4.

S603: The SMF sends first BDP information. In this embodiment of this application, the SMF may send the first BDP information to a UPF, and the UPF may receive the first BDP information. After receiving the first BDP information, the UPF may send second BDP information to an access network device. The second BDP information may be information obtained based on the first BDP information. For example, the second BDP information and the first BDP information may be same information, that is, the second BDP information is the first BDP information; or the second BDP information may be different from the first BDP information. For more descriptions of the first BDP information, refer to S203 in the embodiment shown in FIG. 2, or refer to S403 in the embodiment shown in FIG. 4.

For example, the SMF may generate a user plane data processing rule based on the first BDP information, where the user plane data processing rule may include (or indicate) the first BDP information. Optionally, the user plane data processing rule is, for example, an N4 rule (rule). For example, the first BDP information may be included in a forwarding action rule (forwarding action rule, FAR) in the N4 rule, or included in a packet detection rule (packet detection rule, PDR) in the N4 rule.

Optionally, in S603, the SMF may further send first indication information to the UPF. For example, S603 may be replaced with that the SMF sends first information to the UPF, where the first information includes the first BDP information and the first indication information. The first indication information may indicate the UPF to send BDP information to the access network device, or indicate the access network device to send BDP information to the access network device based on the first BDP information. After receiving the first indication information and the first BDP information, the UPF may send the second BDP information to the access network device based on an indication of the first indication information.

Alternatively, the SMF may not need to send the first indication information, but send the first BDP information. For example, if the SMF sends the first BDP information to the UPF according to the FAR in the N4 rule, the UPF can determine to send the BDP information to the access network device based on the first BDP information after receiving the FAR. In this case, it may be considered that the first BDP information has an implicit indication function, and indicates the UPF to send the BDP information to the access network device, or indicates the access network device to send the BDP information to the access network device based on the first BDP information. Alternatively, it may be considered that the first BDP information does not have an indication function, but the UPF can determine (for example, according to the FAR) that the BDP information needs to be indicated in a user plane data packet between the UPF and the access network device.

S604: The UPF sends a data packet corresponding to a first service to the access network device. Correspondingly, the access network device receives the data packet corresponding to the first service.

When receiving the data packet corresponding to the first service, the UPF may include the second BDP information in the data packet based on the received first BDP information (or based on the received first indication information and the received first BDP information), and then send, to the access network device, the data packet in which the second BDP information is included. Therefore, the data packet that is of the first service and that is processed by the UPF may include (or indicate) the second BDP information. It can be learned from the description of the foregoing embodiment that the second BDP information may include one or more pieces of BDP information, and each piece of BDP information corresponds to a corresponding QoS flow. For example, if the data packet is transmitted through a QoS flow 1, the second BDP information included (or indicated) in the data packet may be BDP information that corresponds to the QoS flow 1 and that is in the second BDP information. For example, the second BDP information may be included in a header (header) of the data packet, or included in a payload (payload) of the data packet, for example, included in x bytes (byte) at the beginning of the payload or x bytes at the end of the payload, where x is a positive integer, or included in a specific byte of the payload.

The first service corresponds to one or more QoS flows, and each QoS flow may transmit a plurality of data packets corresponding to the first service. Optionally, the UPF may include the second BDP information in each data packet transmitted on each QoS flow corresponding to the first service. Alternatively, the UPF may include the second BDP information in some data packets transmitted on each QoS flow corresponding to the first service. The some data packets include, for example, first K data packets transmitted on the QoS flow, and K is a positive integer. Alternatively, the some data packets are, for example, data packets separated by P data packets in the data packets transmitted on the QoS flow. For example, the some data packets may include an i^{th} data packet, an (i+P)^{th} data packet, an (i+2P)^{th} data packet, ..., transmitted on the QoS flow.

If the second BDP information in the data packet is an index, the access network device may determine, based on preconfigured information, information predefined in the protocol, information negotiated with the SMF, or the like, the BDP parameter included in the second BDP information. For example, the preconfigured information, the information predefined in the protocol, or the information negotiated with the SMF includes the information about the association relationship between the BDP parameter and the index.

S605: The access network device schedules a resource for the UE based on the second BDP information.

For more content of S605, refer to S204 in the embodiment shown in FIG. 2.

In this embodiment of this application, that the access network device may schedule the resource for the UE based on the second BDP information may be understood as that the access network device may provide guarantee for QoS of the service based on the second BDP information. A BDP represents a bandwidth-delay product. Efficiency and performance of network transmission may be evaluated based on the BDP. In addition, if the BDP is guaranteed, efficiency and quality of network transmission can be optimized. In other words, in embodiments of this application, parameters such as a bandwidth and a delay may be considered in combination, to comprehensively ensure network performance. In addition, in this embodiment of this application, the second BDP information may be indicated to the access network device by the user plane data packet, and does not need to be indicated through control plane signaling, so that control plane signaling overheads can be reduced.

In the embodiment shown in FIG. 2 or FIG. 4, that the first BDP information is included in the QoS profile is used as an example. In addition to corresponding to one QoS profile (to be distinguished from an alternative QoS profile, for example, the QoS profile is referred to as a regular QoS profile), one QoS flow may correspond to one or more alternative QoS profiles (alternative QoS profiles). Therefore, it is proposed in this embodiment of this application that the first BDP information may be included in the alternative QoS profile, or the first BDP information may be included in the regular QoS profile and the alternative QoS profile. For example, if one QoS flow corresponds to only one QoS profile, the QoS profile is a regular QoS profile; or if one QoS flow corresponds to two or more QoS profiles, one of the QoS profiles is considered as a regular QoS profile, and the remaining QoS profiles are considered as alternative QoS profiles. For example, in this embodiment of this application, the first BDP information may be included in a QoS profile corresponding to the QoS flow corresponding to the first service. For one QoS flow, the first BDP information may be included in all or a part of QoS profiles corresponding to the QoS flow. The all or part of QoS profiles may include an alternative QoS profile and do not include a regular QoS profile, or include both an alternative QoS profile and a regular QoS profile.

Optionally, in this manner, if the BDP information included in the QoS profile includes a BDP parameter, the BDP parameter may not include a range of a BDP, but may include a delay range of the BDP and/or a bandwidth range of the BDP, and the like.

Refer to FIG. 7. An embodiment of this application provides a fourth communication method. In the method, first BDP information may be included in an alternative QoS profile, or may be included in a regular QoS profile and an alternative QoS profile.

S701: UE sends a request 1. Correspondingly, an SMF receives the request 1.

For more content of S701, refer to S201 in the embodiment shown in FIG. 2. Similar to the embodiment shown in FIG. 2, S701 is also an optional step.

S702: The SMF obtains first BDP requirement information.

Optionally, the first BDP requirement information may include (or indicate) BDP requirement information that is of a first service and that is indicated by subscription information of the UE, and/or include BDP requirement information that is of the first service and that is indicated by a PCC rule. Alternatively, the SMF may determine the first BDP requirement information based on BDP requirement information that is of a first service and that is indicated by subscription information of the UE and/or based on BDP requirement information that is of the first service and that is indicated by a PCC rule. The first service is, for example, a service transmitted by the PDU session that is requested to be established or modified by the request 1.

For example, the SMF may obtain the PCC rule from the PCF. The PCC rule may indicate the BDP requirement information of the first service, for example, referred to as BDP requirement information B. For a relationship between the BDP requirement information B and the first BDP requirement information, refer to S202 in the embodiment shown in FIG. 2. Optionally, the PCC rule may include (or indicate) an alternative QoS parameter set corresponding to the first service. The PCC rule corresponds to the PDU session in S201, and the first service may be a service transmitted through the PDU session. For example, the PDU session may transmit one or more services, and the first service may be one of the services. The first service may correspond to one or more QoS flows. Each QoS flow in a part of or all QoS flows in the one or more QoS flows may correspond to at least one QoS parameter set. The at least one QoS parameter set may include an alternative QoS parameter set (corresponding to an alternative QoS profile), or include a regular QoS parameter set (corresponding to a regular QoS profile) and an alternative QoS parameter set. For example, each QoS flow may be a QoS flow of a GBR type or a QoS flow of a non-GBR type; or the one or more QoS flows may include a QoS flow of a GBR type and/or a QoS flow of a non-GBR type. The PCC rule may include (or indicate) a part of or all QoS parameter sets corresponding to each QoS flow in a part of or all QoS flows in the one or more QoS flows, and the BDP requirement information B may be included in these QoS parameter sets. For a relationship between the BDP requirement information B and the QoS flow, refer to S202 in the embodiment shown in FIG. 2. For example, BDP requirement information B included in one QoS parameter set in the QoS parameter sets may be specifically BDP requirement information that is of a QoS flow corresponding to the QoS parameter set and that is included in the BDP requirement information B.

The BDP requirement information B may include one or more pieces of BDP requirement information, and the one or more pieces of BDP requirement information included in the BDP requirement information B may meet one or more of the following: The one or more pieces of BDP requirement information one-to-one correspond to one or more QoS flows used to transmit the first service; or in the one or more pieces of BDP requirement information, one piece of BDP requirement information may correspond to a plurality of QoS flows; or in the one or more pieces of BDP requirement information, a plurality of pieces of BDP requirement information may correspond to one QoS flow. Any piece of BDP requirement information included in the BDP requirement information B may include a BDP parameter, or include an index of the BDP parameter. For description of content such as the BDP parameter, refer to S202 in the embodiment shown in FIG. 2.

Optionally, at least one QoS parameter set corresponding to one QoS flow may be considered as belonging to Q1 groups, where Q1 is a positive integer, and each group in the Q1 groups may include one or more QoS parameter sets. Therefore, the Q1 groups may also be referred to as Q1 QoS parameter set groups. Optionally, each alternative QoS parameter set included in one group (for example, each group) in the Q1 groups may have a corresponding priority. Q1 is, for example, a quantity of pieces of BDP requirement information corresponding to the QoS flow. For example, the Q1 groups one-to-one correspond to Q1 pieces of BDP requirement information corresponding to the QoS flow. If one QoS flow corresponds to one piece of BDP requirement information, at least one QoS parameter set corresponding to the QoS flow corresponds to the BDP requirement information. BDP parameters included in different QoS parameter sets in any group in the Q1 groups may be the same or different, but the BDP parameters included in the different QoS parameter sets in the group may be all parameters allowed by BDP requirement information corresponding to the group. For example, both BDP requirement information a and BDP requirement information b included in the BDP requirement information B correspond to the QoS flow 1, where a range of a BDP included in the BDP requirement information a is a range 1, and a range of a BDP included in the BDP requirement information b is a range 2. At least one QoS parameter set corresponding to the QoS flow 1 is separately included in a group A and a group B, and the group A and the group B are two groups in the Q1 groups. Each QoS parameter set in the group A may include a delay range of the BDP and a bandwidth range of the BDP. Delay ranges included in different QoS parameter sets may be the same or different, and bandwidth ranges included in the different QoS parameter sets may be the same or different. However, any delay in the delay range included in each QoS parameter set may be a delay allowed by the range 1 of the BDP, and any bandwidth in the bandwidth range included in each QoS parameter set may be a bandwidth allowed in the range 1 of the BDP. Each QoS parameter set in the group B may include a delay range of the BDP and a bandwidth range of the BDP. Delay ranges included in different QoS parameter sets may be the same or different, and bandwidth ranges included in the different QoS parameter sets may be the same or different. However, any delay in the delay range included in each QoS parameter set may be a delay allowed by the range 2 of the BDP, and any bandwidth in the bandwidth range included in each QoS parameter set may be a bandwidth allowed in the range 2 of the BDP.

For example, the range 1 of the BDP is one value of the BDP, and the value is 6. The group A includes four QoS parameter sets. A delay range included in a QoS parameter set 1 in the four QoS parameter sets is, for example, one delay value, and the delay value is 1. A bandwidth range included in the QoS parameter set 1 is, for example, one bandwidth value, and the bandwidth value is 6. A delay range included in a QoS parameter set 2 in the four QoS parameter sets is, for example, one delay value, and the delay value is 6. A bandwidth range included in the QoS parameter set 2 is, for example, one bandwidth value, and the bandwidth value is 1. A delay range included in a QoS parameter set 3 in the four QoS parameter sets is, for example, one delay value, and the delay value is 2. A bandwidth range included in the QoS parameter set 3 is, for example, one bandwidth value, and the bandwidth value is 3. A delay range included in a QoS parameter set 4 in the four QoS parameter sets is, for example, one delay value, and the delay value is 3. A bandwidth range included in the QoS parameter set 4 is, for example, one bandwidth value, and the bandwidth value is 2. It can be learned that both a product of 1 and 6 and a product of 2 and 3 are 6. In other words, all BDP parameters included in the four QoS parameter sets are parameters allowed when the value of the BDP is 6, or both a product of a delay and a bandwidth included in each QoS parameter set in the four QoS parameter sets and 6 meet a first calculation rule. For description of content such as the first calculation rule, refer to the embodiment shown in FIG. 2.

It can be learned that in this embodiment of this application, if the BDP requirement information included in the QoS parameter set is a BDP parameter, the BDP parameter may not include a range of the BDP, but may include a delay range of the BDP, a bandwidth range of the BDP, and/or the like. In addition, different QoS parameter sets corresponding to same BDP requirement information may include different delay ranges of the BDP, and/or may include different bandwidth ranges of the BDP. This is equivalent to that same BDP requirement information may be reflected by using different delay ranges of the BDP and/or different bandwidth ranges of the BDP.

In addition, for example, if the BDP requirement information B includes a total of Q2 pieces of BDP requirement information, the Q2 pieces of BDP requirement information may correspond to Q2 QoS parameter set groups, and the Q2 QoS parameter set groups may one-to-one correspond to QoS flows of the first service. In this case, the first service corresponds to a total of Q2 QoS flows, and different QoS flows correspond to different pieces of BDP requirement information; or a plurality of QoS parameter set groups in the Q2 QoS parameter set groups may correspond to one QoS flow of the first service; or one QoS parameter set group in the Q2 QoS parameter set groups may correspond to a plurality of QoS flows of the first service.

For more content of S702, for example, content of the first BDP requirement information and an obtaining manner, refer to S202 in the embodiment shown in FIG. 2.

S703: The SMF sends first BDP information. In this embodiment of this application, the SMF may send the first BDP information to an access network device, and the access network device may receive the first BDP information.

The first BDP information may be determined based on the first BDP requirement information. For example, the first BDP information is the first BDP requirement information, or the first BDP information may be different from the first BDP requirement information. The first BDP information corresponds to the first service. Therefore, the first BDP information may include one or more pieces of BDP information. For more descriptions, refer to S202 in the embodiment shown in FIG. 2.

For example, a manner in which the SMF sends the first BDP information to the access network device: The SMF includes the first BDP information in a QoS profile of the QoS flow corresponding to the first service, to send the first BDP information by sending the QoS profile corresponding to the first service. The SMF includes a QoS profile of the first BDP information, where the QoS profile may include an alternative QoS profile, or may include an alternative QoS profile and a regular QoS profile. For example, it may be considered that at least one QoS profile corresponding to any QoS flow of the first service is included in Q1 groups, where Q1 is a positive integer, and Q1 is, for example, a quantity of BDP information corresponding to the QoS flow. For example, the Q1 groups one-to-one correspond to Q1 pieces of BDP information corresponding to the QoS flow. The at least one QoS profile corresponding to the QoS flow may include all or a part of alternative QoS profiles corresponding to the QoS flow, or include a regular QoS profile corresponding to the QoS flow, and include all or a part of alternative QoS profiles corresponding to the QoS flow. Optionally, each alternative QoS profile included in one group in the Q1 groups may have a corresponding priority. For example, the access network device may select an alternative QoS profile in one group in descending order of priorities.

If one QoS flow corresponds to one piece of BDP information, at least one QoS profile corresponding to the QoS flow corresponds to the BDP information. BDP parameters included in different QoS profiles in any group in the Q1 groups may be the same or different, but the BDP parameters included in the different QoS profiles in the group may be all parameters allowed by BDP information corresponding to the group; or the BDP parameters included in the different QoS profiles in the group may be determined based on BDP information corresponding to the group. For example, the first BDP information includes second BDP information and third BDP information, both the second BDP information and the third BDP information correspond to the QoS flow 1, the second BDP information includes a range 1 of the BDP, and the third BDP information includes a range 2 of the BDP. At least one QoS profile corresponding to the QoS flow 1 is included in a group A and a group B. For example, the group A includes M QoS profiles, the group B includes N QoS profiles, and both M and N are positive integers. Each QoS profile in the group A may include a delay range of the BDP and a bandwidth range of the BDP. Delay ranges included in different QoS profiles may be the same or different, and bandwidth ranges included in the different QoS profiles may be the same or different. However, any delay in the delay range included in each QoS profile may be a delay allowed by the range 1 of the BDP, and any bandwidth in the bandwidth range included in each QoS profile may be a bandwidth allowed in the range 1 of the BDP. Each QoS profile in the group B may include a delay range and a bandwidth range. Delay ranges included in different QoS profiles may be the same or different, and bandwidth ranges included in the different QoS profiles may be the same or different. However, any delay in the delay range included in each QoS profile may be a delay allowed by the range 2 of the BDP, and any bandwidth in the bandwidth range included in each QoS profile may be a bandwidth allowed in the range 2 of the BDP.

In the foregoing example, if the group A and the group B correspond to different QoS flows, and the two QoS flows respectively correspond to the second BDP information and the third BDP information, implementations of QoS profiles in the group A and the group B are also the same as those described above. It may be understood that the QoS profile corresponding to the first service (for example, including a part of or all alternative QoS profiles of the QoS flow corresponding to the first service, or including a regular QoS profile of the QoS flow corresponding to the first service, and a part of or all alternative QoS profiles of the QoS flow corresponding to the first service) may be divided into a plurality of QoS profile groups, and the plurality of QoS profile groups one-to-one correspond to the BDP information included in the first BDP information. Any QoS profile group may correspond to one QoS flow. The QoS profile group may include all or a part of alternative QoS profiles corresponding to the QoS flow, or include a regular QoS profile corresponding to the QoS flow, and include all or a part of alternative QoS profiles corresponding to the QoS flow. A delay range included in each QoS profile in any QoS profile group may be a delay range allowed by BDP information corresponding to the group, and a bandwidth range included in each QoS profile may be a bandwidth range allowed by BDP information corresponding to the group.

Alternatively, S703 may be replaced with that the SMF sends first BDP information to a UPF, and the UPF sends second BDP information to an access network device; or that the SMF sends first information to a UPF, where the first information includes first BDP information and first indication information, and the UPF sends second BDP information to an access network device.

Optionally, the SMF may generate a user plane data processing rule based on the first BDP information, where the user plane data processing rule may include (or indicate) the first BDP information. Optionally, the user plane data processing rule is, for example, an N4 rule. For example, the first BDP information may be included in an FAR in the N4 rule, or may be included in a PDR in the N4 rule.

For example, the N4 rule may include one FAR, and the FAR may include the complete first BDP information.

Alternatively, a quantity of FARs included in the N4 rule is Q3, and Q3 is a positive integer. Q3 is a quantity of QoS profile groups to which QoS profiles corresponding to all or a part of QoS flows of the first service belong. In other words, QoS profiles corresponding to all or a part of QoS flows of the first service belong to Q3 groups, and Q3 FARs included in the N4 rule one-to-one correspond to the Q3 groups. For example, each FAR in the Q3 FARs may include one group in the Q3 groups. Each group in the Q3 groups corresponds to one QoS flow and corresponds to one piece of BDP information in the first BDP information. Therefore, each FAR in the Q3 FARs included in the N4 rule may include one piece of BDP information in the first BDP information. Any group in the Q3 groups may include all or a part of alternative QoS profiles of QoS flows corresponding to the group, or include a regular QoS profile of a QoS flow corresponding to the group, and all or a part of alternative QoS profiles of QoS flows corresponding to the group. Optionally, each alternative QoS profile in one group included in one FAR may have a corresponding priority.

When receiving the data packet corresponding to the first service, the UPF may include the second BDP information in the data packet based on the received first BDP information (or based on the received first indication information and the received first BDP information), and then send, to the access network device, the data packet in which the second BDP information is included. Therefore, the data packet that is of the first service and that is processed by the UPF may include (or indicate) the second BDP information. For example, if a data packet that is of the first service and that is received by the UPF is transmitted through the QoS flow 1, the UPF may include, in the data packet, BDP information corresponding to the QoS flow 1. For example, if the BDP information corresponding to the QoS flow 1 is specifically included in a group of QoS profiles in the Q3 groups, the UPF may include, in the data packet, all BDP information included in the group of QoS profiles; or the UPF may preferentially include, in the data packet in descending order of priorities, BDP information included in a QoS profile with a higher priority in the group of QoS profiles; or if the group of QoS profiles includes a regular QoS profile, the UPF may preferentially include, in the data packet, BDP information included in the regular QoS profile.

For more content of the replacement solution of S703, for example, more processing manners of the UPF, content included in the second BDP information, and the first indication information, refer to related descriptions of the embodiment shown in FIG. 6.

It can be learned that, in this embodiment of this application, if BDP information included in one QoS profile is a BDP parameter, the BDP parameter may not include a range of the BDP, but may include a delay range of the BDP (for example, the delay range is one delay value), a bandwidth range of the BDP (for example, the bandwidth range is one bandwidth value), and/or the like. Different QoS profiles corresponding to same BDP information may include different delay ranges of the BDP, and/or different bandwidth ranges of the BDP. This is equivalent to that same BDP information may be reflected by using different delay ranges of the BDP and/or different bandwidth ranges of the BDP. Therefore, the access network device does not need to determine a delay and/or a bandwidth to be selected. The access network device only needs to select a QoS profile, and can perform execution based on a delay range (for example, a delay value) and/or a bandwidth range (for example, a bandwidth value) included in the QoS profile, thereby simplifying a processing process of the access network device.

S704: The access network device schedules a resource for the UE based on the first BDP information.

According to the foregoing steps, the access network device obtains the first BDP information, so that the access network device can provide BDP guarantee for all or a part of QoS flows corresponding to the first service. For example, if one QoS flow corresponds to a plurality of pieces of BDP information, the plurality of pieces of BDP information may respectively have corresponding priorities (for example, a priority corresponding to the BDP information may be indicated by the BDP information or information carrying the BDP information, or a priority corresponding to the BDP information is preconfigured or predefined), and the access network device may select, in descending order of priorities, the BDP information corresponding to the QoS flow. For another example, if one piece of BDP information corresponds to a plurality of QoS profiles, and the plurality of QoS profiles include a regular QoS profile, the access network device may preferentially select the regular QoS profile to provide BDP guarantee; or if the plurality of QoS profiles do not include a regular QoS profile and include a plurality of alternative QoS profiles, and the plurality of alternative QoS profiles may also have corresponding priorities, the access network device may select an alternative QoS profile in descending order of priorities; or the plurality of QoS profiles include a regular QoS profile and a plurality of alternative QoS profiles, and the plurality of alternative QoS profiles may also have corresponding priorities, for example, if BDP information provided by the regular QoS profile is invalid or has poor effect, the access network device may select an alternative QoS profile in descending order of priorities. In the foregoing manner, the access network device can provide BDP guarantee based on good or important BDP information as much as possible.

For more content of S704, refer to S204 in the embodiment shown in FIG. 2.

In this embodiment of this application, that the access network device may schedule, based on the first BDP information, the resource for the UE to perform the first service may be understood as that the access network device may provide guarantee for QoS of the service based on the first BDP information. A BDP represents a bandwidth-delay product. Efficiency and performance of network transmission may be evaluated based on the BDP. In addition, if the BDP is guaranteed, efficiency and quality of network transmission can be optimized. In other words, in embodiments of this application, parameters such as a bandwidth and a delay may be considered in combination, to comprehensively ensure network performance. In addition, in this embodiment of this application, the BDP information may be included in an alternative QoS profile, and different alternative QoS profiles corresponding to one piece of BDP information may include different parameter values corresponding to the BDP information. The access network device may select a corresponding alternative QoS profile as required to schedule the resource for the UE to perform the first service. Implementation is simple for the access network device, and the access network device does not need to determine the parameter value based on the BDP information.

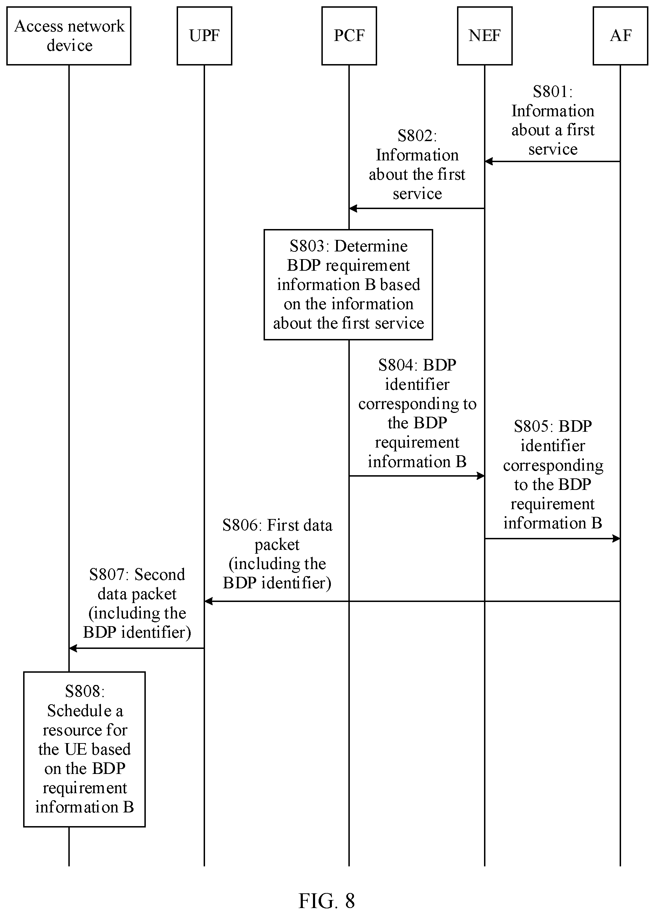

As described in the foregoing embodiments, the PCF may provide a PCC rule, and the PCC rule may include the BDP requirement information B. The following describes a fifth communication method provided in an embodiment of this application. The method is used to describe how the PCF determines the BDP requirement information B. FIG. 8 is a flowchart of the method. In addition to the embodiment shown in FIG. 8, the PCF may further determine the BDP requirement information B in another manner. Therefore, the embodiment shown in FIG. 8 is an optional embodiment, where all steps are optional steps, and are represented by solid lines in the accompanying drawings.

S801: An AF sends information about a first service to an NEF. Correspondingly, the NEF receives the information about the first service.

The information about the first service includes, for example, one or more of the following: an identifier of the first service, type (for example, a media type (media type) of the first service) information of the first service, media format (media format) information corresponding to the first service, a delay requirement (for example, an end-to-end delay, where the end-to-end delay is, for example, a delay from UE to a computing node configured to process the first service) information of the first service, bandwidth requirement information of the first service, or jitter requirement information of the first service.

Optionally, the AF may send a first request to the NEF, and the first request may include the information about the first service. The first request may request to create a QoS flow corresponding to the first service. For example, the first request is a QoS creation request message, or may be another message.

S802: The NEF sends the information about the first service to a PCF. Correspondingly, the PCF receives the information about the first service.

Optionally, the NEF may perform an authorization check on the first request from the AF, for example, determine whether the AF has permission to send the first request to the PCF. If it is determined that the AF has the permission, the NEF may perform S802. The NEF is an optional network element. If the NEF is not set, S801 and S802 may be combined into one step. This step includes: The AF sends the first request to the PCF, and the PCF receives the first request.

S803: The PCF determines BDP requirement information B based on the information about the first service.

For example, the PCF may determine the BDP requirement information B based on the information about the first service. For the BDP requirement information B, refer to the description of any one of the foregoing method embodiments. Optionally, the PCF may determine a PCC rule based on the BDP requirement information B, where the PCC rule may indicate the BDP requirement information B. For example, the PCC rule may include a BDP parameter corresponding to the BDP requirement information B, or include an index of the BDP parameter corresponding to the BDP requirement information B.

Alternatively, the PCF may determine the PCC rule without depending on the information from the AF. For example, the PCF may determine, based on a requirement of the first service, that the first service needs to provide BDP guarantee, to determine the BDP requirement information B for the first service. In this case, S801 and S802 do not need to be performed.

S804: The PCF sends a BDP identifier corresponding to the BDP requirement information B to the NEF. Correspondingly, the NEF receives the BDP identifier. The BDP identifier may indicate the BDP requirement information B.

S805: The NEF sends the BDP identifier to the AF. Correspondingly, the AF receives the BDP identifier. If the NEF is not set, S804 and S805 may be combined into one step. This step includes: The PCF sends the BDP identifier to the AF, and the AF receives the BDP identifier. The BDP identifier may also have another name, for example, referred to as an identifier, a first identifier, or an index. This is not limited herein.

S806: The AF sends a first data packet corresponding to the first service. Correspondingly, the UPF receives the first data packet.

For example, the first data packet may include the BDP identifier. For example, the BDP identifier is included in a header of the first data packet.

S807: The UPF sends a second data packet to an access network device. Correspondingly, the access network device receives the second data packet.

The second data packet may be determined based on the first data packet. For example, the UPF may copy the BDP identifier in the first data packet from the AF to the second data packet according to an N4 rule from an SMF (data included in the second data packet may be the same as data included in the first data packet), and then send the second data packet to the access network device. Optionally, the N4 rule may indicate the UPF to include the index of the BDP parameter in the data packet from the AF in the data packet sent to the access network device.

S808: The access network device schedules a resource for the UE based on the BDP requirement information B.

For example, the access network device may determine, based on preconfigured information, information predefined in a protocol, information negotiated with the SMF, or the like, a BDP parameter corresponding to the BDP identifier. The BDP parameter is a BDP parameter included in the BDP requirement information B. For example, the preconfigured information, the information predefined in the protocol, or the information negotiated with the SMF includes information about an association relationship between the BDP parameter and the BDP identifier. In addition, in this solution, the BDP requirement information B is, for example, the first BDP information described in the foregoing embodiment, that is, the BDP information used by the access network device to schedule the resource for the UE. Based on this, the access network device can provide BDP guarantee for all or a part of QoS flows corresponding to the first service.

For more content of S808, refer to S204 in the embodiment shown in FIG. 2.

In the foregoing steps in this embodiment of this application, an example in which the BDP information is indicated by the AF is used. Alternatively, the BDP information needs to be transmitted to the access network device without being indicated by the AF. In this case, S804 to S807 may not be performed, but may be performed in the manner described in the foregoing method embodiment. For example, the PCF may send the PCC rule to the SMF, and the SMF sends the first BDP information to the access network device, or the SMF sends the first BDP information to the UPF. In addition, in the foregoing method embodiment, a solution in which the SMF sends the first BDP information to the access network device may be replaced with a solution in which the SMF sends the first BDP information to the UPF, or may be replaced with a solution in which the PCF sends the BDP requirement information B to the AF. In the foregoing method embodiment, a solution in which the SMF sends the first BDP information to the UPF may be replaced with a solution in which the SMF sends the first BDP information to the access network device, or may be replaced with a solution in which the PCF sends the BDP requirement information B to the AF. It is equivalent to that the access network device obtains the first BDP information in a plurality of manners. For example, the first BDP information may be indicated by the AF by using the data packet, or may be indicated by the UPF by using the data packet, or may be sent by the SMF to the access network device. In any embodiment of this application, any one of the manners may be used.

In this embodiment of this application, the PCF may determine the BDP requirement information B based on the information about the first service, so that the BDP requirement information B can reflect the requirement of the first service. Based on this, the access network device can provide proper BDP guarantee for the first service.

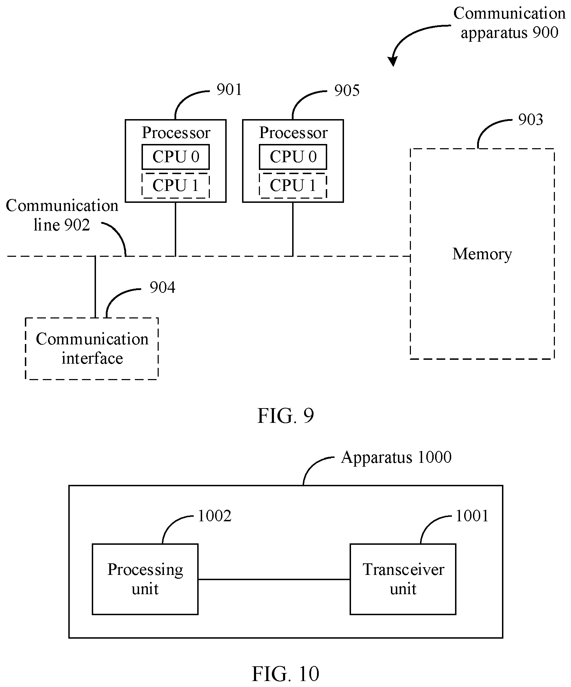

FIG. 9 is a diagram of a structure of a communication apparatus according to an embodiment of this application. A communication apparatus 900 may be the SMF in the embodiment shown in any one of FIG. 2, FIG. 4, and FIG. 6 to FIG. 8 or a circuit system of the SMF, and is configured to implement the method corresponding to the SMF in the foregoing method embodiments. Alternatively, the communication apparatus 900 may be the PCF in the embodiment shown in any one of FIG. 2, FIG. 4, and FIG. 6 to FIG. 8 or a circuit system of the PCF, and is configured to implement the method corresponding to the PCF in the foregoing method embodiments. Alternatively, the communication apparatus 900 may be the UPF in the embodiment shown in any one of FIG. 2, FIG. 4, and FIG. 6 to FIG. 8 or a circuit system of the UPF, and is configured to implement the method corresponding to the UPF in the foregoing method embodiments. Alternatively, the communication apparatus 900 may be the access network device in the embodiment shown in any one of FIG. 2, FIG. 4, and FIG. 6 to FIG. 8 or a circuit system of the access network device, and is configured to implement the method corresponding to the access network device in the foregoing method embodiments. Alternatively, the communication apparatus 900 may be the AF in the embodiment shown in any one of FIG. 2, FIG. 4, and FIG. 6 to FIG. 8 or a circuit system of the AF, and is configured to implement the method corresponding to the AF in the foregoing method embodiments. For example, a circuit system is a chip system.

The communication apparatus 900 includes at least one processor 901. The processor 901 may be configured to perform internal processing of the apparatus, to implement a specific control processing function. Optionally, the processor 901 includes instructions. Optionally, the processor 901 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 900 includes one or more memories 903, configured to store instructions. Optionally, the memory 903 may further store data. The processor and the memory may be separately disposed, or may be integrated together.

Optionally, the communication apparatus 900 includes a communication line 902 and at least one communication interface 904. The memory 903, the communication line 902, and the communication interface 904 are all optional, and therefore are all represented by dashed lines in FIG. 9.

Optionally, the communication apparatus 900 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 900 through an antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 901 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 902 may include a path for transmitting information between the foregoing components.

The communication interface 904 uses any transceiver-type apparatus, to communicate with another device or a communication network such as the Ethernet, a radio access network (radio access network, RAN), a wireless local area network (wireless local area network, WLAN), or a wired access network.

The memory 903 may be a read-only memory (read-only memory, ROM) or another type of static storage device that can store static information and instructions, or a random access memory (random access memory, RAM) or another type of dynamic storage device that can store information and instructions. The memory may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), or magnetic disk storage medium or another magnetic storage device, or any other medium that can be used to carry or store expected program code in a form of instructions or a data structure and that is accessible by a computer, but is not limited thereto. The memory 903 may exist independently, and is connected to the processor 901 through the communication line 902. Alternatively, the memory 903 may be integrated with the processor 901.

The memory 903 is configured to store computer-executable instructions for performing the solutions in this application, and the processor 901 controls execution. The processor 901 is configured to execute the computer-executable instructions stored in the memory 903, to implement the steps performed by the SMF, the UPF, the PCF, the access network device, or the AF in the embodiment shown in any one of FIG. 2, FIG. 4, and FIG. 6 to FIG. 8.

Optionally, the computer-executable instructions in this embodiment of this application may also be referred to as application program code. This is not specifically limited in this embodiment of this application.

During specific implementation, in an embodiment, the processor 901 may include one or more CPUs, for example, a CPU 0 and a CPU 1 in FIG. 9.

During specific implementation, in an embodiment, the communication apparatus 900 may include a plurality of processors, for example, the processor 901 and a processor 905 in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 9 is a chip, for example, a chip of the SMF, a chip of the UPF, a chip of the PCF, a chip of the access network device, or a chip of the AF, the chip includes the processor 901 (which may further include the processor 905), the communication line 902, and the communication interface 904. Optionally, the chip may include the memory 903. Specifically, the communication interface 904 may be an input interface, a pin, a circuit, or the like. The memory 903 may be a register, a cache, or the like. The processor 901 and the processor 905 may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when each function module is obtained through division based on each corresponding function, FIG. 10 is a diagram of an apparatus. An apparatus 1000 may be the SMF, the UPF, the PCF, the AF, or the access network device in the foregoing method embodiments, or a chip in the SMF, a chip in the UPF, a chip in the PCF, a chip in the access network device, or a chip in the AF. The apparatus 1000 includes a processing unit 1002 and a transceiver unit 1001.

It should be understood that the apparatus 1000 may be configured to implement the steps performed by the SMF, the UPF, the PCF, the AF, or the access network device in the communication methods in embodiments of this application. For related features, refer to the embodiment shown in any one of FIG. 2, FIG. 4, and FIG. 6 to FIG. 8. Details are not described herein again.

Optionally, functions/implementation processes of the transceiver unit 1001 and the processing unit 1002 in FIG. 10 may be implemented by the processor 901 in FIG. 9 by invoking the computer-executable instructions stored in the memory 903. Alternatively, functions/implementation processes of the processing unit 1002 in FIG. 10 may be implemented by the processor 901 in FIG. 9 by invoking the computer-executable instructions stored in the memory 903, and functions/implementation processes of the transceiver unit 1001 in FIG. 10 may be implemented by the communication interface 904 in FIG. 9.

Optionally, when the apparatus 1000 is a chip or a circuit, functions/implementation processes of the transceiver unit 1001 may alternatively be implemented through a pin, a circuit, or the like. Optionally, the transceiver unit 1001 may include a sending unit and/or a receiving unit. The sending unit is configured to implement a sending function, and the receiving unit is configured to implement a receiving function. Alternatively, the transceiver unit 1001 may be an entire module that can implement a sending function and/or a receiving function. Optionally, the transceiver unit 1001 may be implemented by a transceiver.

This application further provides a computer-readable storage medium. The computer-readable storage medium stores a computer program or instructions. When the computer program or the instructions are run, the method performed by the SMF, the UPF, the PCF, the AF, or the access network device in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the SMF, the UPF, the PCF, the AF, or the access network device in any one of the foregoing method embodiments.

An embodiment of this application further provides a processing apparatus, including a processor and an interface. The processor is configured to perform the method performed by the SMF, the UPF, the PCF, the AF, or the access network device in any one of the foregoing method embodiments.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state disk, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, multiple microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor so that the processor may read information from the storage medium and write information to the storage medium. Optionally, the storage medium may be integrated into a processor. The processor and the storage medium may be disposed in an ASIC, and the ASIC may be disposed in a terminal device. Optionally, the processor and the storage medium may be disposed in different parts of a terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or a logic conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, any one or more of the SMF, the UPF, the PCF, the AF, or the access network device may perform a part of or all steps in embodiments of this application. These steps or operations are merely examples. In embodiments of this application, other operations or variations of various operations may be further performed. In addition, the steps may be performed in a sequence different from a sequence presented in embodiments of this application, and it is possible that not all operations in embodiments of this application need to be performed.

## Claims

1. A communication method, wherein the method comprises:
obtaining first BDP requirement information, wherein the first BDP requirement information indicates a requirement for a product of a bandwidth and a transmission delay that correspond to a first service; and
sending first BDP information to an access network device, wherein the first BDP information is determined based on the first BDP requirement information, and the first BDP information is used by the access network device to schedule a resource for a terminal device based on the first BDP information.

2. A communication method, wherein the method comprises:
obtaining first BDP requirement information, wherein the first BDP requirement information indicates a requirement for a product of a bandwidth and a transmission delay that correspond to a first service; and
sending first BDP information to a user plane function network element, wherein the first BDP information is determined based on the first BDP requirement information, and the first BDP information indicates the user plane function network element to send BDP information to an access network device.

3. The method according to claim 1 or 2, wherein obtaining the first BDP requirement information comprises one or more of the following:
obtaining subscription information of the terminal device from a subscription profile repository function network element, wherein the subscription information indicates the first BDP requirement information; or
obtaining a policy rule from a policy control function network element, wherein the policy rule indicates the first BDP requirement information; or
obtaining the first BDP requirement information from local policy information.

4. The method according to claim 3, wherein obtaining the first BDP requirement information comprises:
obtaining 5QI information corresponding to the first service, wherein the 5QI information indicates the first BDP requirement information.

5. The method according to any one of claims 1, 3, and 4, wherein sending the first BDP information to the access network device comprises:
sending, to the access network device, a QoS profile of a QoS flow corresponding to the first service, wherein the QoS profile comprises the first BDP information, and a type of the QoS flow is a GBR type or a non-GBR type.

6. The method according to any one of claims 1, 3, and 4, wherein sending the first BDP information to the access network device comprises:
sending, to the access network device, a first alternative QoS profile and a second alternative QoS profile of a QoS flow corresponding to the first service, wherein the first alternative QoS profile comprises a first BDP parameter, the second alternative QoS profile comprises a second BDP parameter, the first BDP information comprises the first BDP parameter and the second BDP parameter, the first BDP parameter comprises a first delay range and a first bandwidth range, the second BDP parameter comprises a second delay range and a second bandwidth range, both the first delay range and the second delay range are delay ranges allowed by a value of the first BDP parameter, both the first bandwidth range and the second bandwidth range are bandwidth ranges allowed by the value of the first BDP parameter, and a type of the QoS flow is a GBR type or a non-GBR type.

7. The method according to any one of claims 2, 3, and 4, wherein sending the first BDP information to the user plane function network element comprises:
sending a user plane data processing rule to the user plane function network element, wherein the user plane data processing rule comprises the first BDP information.

8. The method according to claim 7, wherein
the user plane data processing rule comprises a forwarding action rule, and the first BDP information is comprised in the forwarding action rule; or
the user plane data processing rule comprises a packet detection rule, and the first BDP information is comprised in the packet detection rule.

9. A communication method, comprising:
obtaining information about a first service; and
determining first BDP requirement information based on the information about the first service, wherein the first BDP requirement information indicates a requirement for a product of a bandwidth and a transmission delay that correspond to the first service.

10. The method according to claim 9, wherein the information about the first service comprises one or more of the following:
an identifier of the first service;
type information of the first service;
media format information corresponding to the first service;
bandwidth requirement information of the first service;
delay requirement information of the first service; or
delay jitter requirement information of the first service.

11. The method according to claim 9 or 10, wherein the first BDP requirement information is indicated by 5QI information corresponding to the first service.

12. The method according to any one of claims 9 to 11, wherein the method further comprises:
sending a BDP identifier to an application function network element, wherein the BDP identifier corresponds to the first BDP requirement information, and the BDP identifier is used by the application function network element to comprise the BDP identifier in a data packet of the first service.

13. The method according to any one of claims 9 to 11, wherein the method further comprises:
sending the first BDP requirement information to a session management network element.

14. The method according to claim 13, wherein sending the first BDP requirement information to the session management network element comprises:
sending, to the session management network element, a policy rule of a QoS flow corresponding to the first service, wherein the policy rule comprises the first BDP requirement information, and a type of the QoS flow is a GBR type or a non-GBR type.

15. The method according to claim 13, wherein sending the first BDP requirement information to the session management network element comprises:
sending, to the session management network element, a policy rule of a QoS flow corresponding to the first service, wherein the policy rule comprises a first alternative QoS parameter set and a second alternative QoS parameter set, the first alternative QoS parameter set comprises a first BDP parameter, the second alternative QoS parameter set comprises a second BDP parameter, the first BDP requirement information comprises the first BDP parameter and the second BDP parameter, the first BDP parameter comprises a first delay range and a first bandwidth range, the second BDP parameter comprises a second delay range and a second bandwidth range, both the first delay range and the second delay range are delay ranges allowed by a value of the first BDP parameter, and both the first bandwidth range and the second bandwidth range are bandwidth ranges allowed by the value of the first BDP parameter.

16. The method according to any one of claims 1 to 15, wherein the first BDP requirement information comprises a BDP parameter, or comprises an index corresponding to the BDP parameter.

17. The method according to claim 16, wherein the BDP parameter comprises one or more of the following: a range of a BDP, a delay range of the BDP, or a bandwidth range of the BDP, the delay range is a delay range allowed by the range of the BDP, and the bandwidth range is a bandwidth range allowed by the range of the BDP.

18. The method according to any one of claims 1 to 17, wherein the first BDP requirement information comprises second BDP requirement information and third BDP requirement information.

19. The method according to claim 18, wherein the first BDP requirement information further indicates a priority of the second BDP requirement information and a priority of the third BDP requirement information.

20. A communication method, comprising:
receiving BDP information corresponding to a first flow; and
scheduling, based on the BDP information, a resource for a first service transmitted by a terminal device on the first flow.

21. The method according to claim 20, wherein the BDP information comprises a BDP parameter, or comprises an index corresponding to the BDP parameter, or comprises a BDP identifier.

22. The method according to claim 21, wherein the BDP parameter comprises one or more of the following: a range of a BDP, a delay range of the BDP, or a bandwidth range of the BDP, the delay range is a delay range allowed by the range of the BDP, and the bandwidth range is a bandwidth range allowed by the range of the BDP.

23. The method according to any one of claims 20 to 22, wherein receiving the BDP information corresponding to the first flow comprises:
receiving a QoS profile of a QoS flow corresponding to the first service, wherein the QoS profile comprises the BDP information, and a type of the QoS flow is a GBR type or a non-GBR type.

24. The method according to any one of claims 20 to 22, wherein receiving the BDP information corresponding to the first flow comprises:
receiving a first alternative QoS profile and a second alternative QoS profile of a QoS flow corresponding to the first service, wherein the first alternative QoS profile comprises a first BDP parameter, the second alternative QoS profile comprises a second BDP parameter, the BDP information comprises the first BDP parameter and the second BDP parameter, the first BDP parameter comprises a first delay range and a first bandwidth range, the second BDP parameter comprises a second delay range and a second bandwidth range, both the first delay range and the second delay range are delay ranges allowed by a value of the first BDP parameter, both the first bandwidth range and the second bandwidth range are bandwidth ranges allowed by the value of the first BDP parameter, and a type of the QoS flow is a GBR type or a non-GBR type.

25. The method according to claim 24, wherein the BDP information further indicates a priority of the first BDP parameter and a priority of the second BDP parameter, and scheduling, based on the BDP information, the resource for the first service transmitted by the terminal device on the first flow comprises:
scheduling, based on a BDP parameter with a higher priority in the first BDP parameter and the second BDP parameter, the resource for the first service transmitted by the terminal device on the first flow.

26. A communication apparatus, wherein the communication apparatus comprises a processing unit and a transceiver unit, and the processing unit is coupled to the transceiver unit, to perform the method according to any one of claims 1, 3 to 8, and 16 to 19, or perform the method according to any one of claims 2 to 8 and 16 to 19, or perform the method according to any one of claims 9 to 19, or perform the method according to any one of claims 20 to 25.

27. A communication apparatus, wherein the communication apparatus comprises a processor and a memory, the memory is configured to store a computer program, and the processor is configured to execute the computer program stored in the memory, so that the communication apparatus performs the method according to any one of claims 1, 3 to 8, and 16 to 19, or the communication apparatus performs the method according to any one of claims 2 to 8 and 16 to 19, or the communication apparatus performs the method according to any one of claims 9 to 19, or the communication apparatus performs the method according to any one of claims 20 to 25.

28. A computer-readable storage medium, wherein the computer-readable storage medium is configured to store a computer program; and when the computer program is run on a computer, the computer is enabled to perform the method according to any one of claims 1, 3 to 8, and 16 to 19, or the computer is enabled to perform the method according to any one of claims 2 to 8 and 16 to 19, or the computer is enabled to perform the method according to any one of claims 9 to 19, or the computer is enabled to perform the method according to any one of claims 20 to 25.

29. A computer program product, wherein the computer program product comprises a computer program, and when the computer program is run on a computer, the computer is enabled to perform the method according to any one of claims 1, 3 to 8, and 16 to 19, or the computer is enabled to perform the method according to any one of claims 2 to 8 and 16 to 19, or the computer is enabled to perform the method according to any one of claims 9 to 19, or the computer is enabled to perform the method according to any one of claims 20 to 25.

30. A chip system, wherein the chip system comprises:
a processor and an interface, wherein the processor is configured to: invoke instructions from the interface and run the instructions, and when the processor executes the instructions, the method according to any one of claims 1, 3 to 8, and 16 to 19, or the method according to any one of claims 2 to 8 and 16 to 19, or the method according to any one of claims 9 to 19, or the method according to any one of claims 20 to 25 is implemented.

31. A communication system, wherein the communication system comprises a first core network element and an access network device;
the first core network element is configured to perform the method according to any one of claims 1, 3 to 8, and 16 to 19; and
the access network device is configured to implement the method according to any one of claims 20 to 25.
